# EUROPEAN PATENT APPLICATION

(11) **EP 4 694 164 A1**
(43) Date of publication of application: **11.02.2026**
(21) Application number: 24800198.4
(22) Date of filing: 24.04.2024
(51) Int. Cl.: H04N 23/63, H04N 23/69, H04N 23/62, H04N 23/80, H04N 23/54, G06F 3/0488, G06F 3/04847

(54) **ELECTRONIC DEVICE AND METHOD FOR IMPROVING CAMERA ZOOM PERFORMANCE THEREOF**

(30) Priority: 02.05.2023 KR 20230057306; 07.06.2023 KR 20230072953
(71) Applicant: Samsung Electronics Co., Ltd., Suwon-si, Gyeonggi-do 16677 (KR)
(72) Inventor: AN, Gyushik, Suwon-si, Gyeonggi-do 16677 (KR); YIM, Sunggeun, Suwon-si, Gyeonggi-do 16677 (KR); OH, Byungil, Suwon-si, Gyeonggi-do 16677 (KR); CHO, Minkeun, Suwon-si, Gyeonggi-do 16677 (KR)
(74) Representative: Gulde & Partner
(86) International application number: PCT/KR2024/005529
(87) International publication number: WO 2024/228514

(57) **Abstract**

An electronic device according one embodiment comprises: a display; an image sensor; an image signal processor for processing frames transmitted from the image sensor; a scaler arranged between an output end of an image pipeline and an input end of the display; a processor operatively connected to the image signal processor and the scaler; and a memory for storing instructions that can be executed by the processor, wherein, during a camera function execution, the instructions enable the electronic device to: acquire, from the image sensor, a first frame of a first zoom magnification; control that a second frame to Nth frames are image-processed at the first zoom magnification through the image signal processor while the first frame of the first zoom magnification processed through the image signal processor is output to the display; receive a user input for requesting the display of a second zoom magnification, which differs from the first zoom magnification at the time of N+1 frame acquisition; request the image signal processor to process the N+1 frame; set to transmit, to the scaler, a second zoom magnification request at the time of N+1 frame acquisition; and allow the scaler to scale, in a second frame output order, at the second zoom magnification requested at the time of N+1 frame acquisition, a second frame processed at the first zoom magnification in the image signal processor so as to transmit same to the display.

## Description

### [Technical Field]

The disclosure relates to an electronic device and a method of improving the camera zoom performance thereof.

### [Background Art]

An electronic device (for example, a smartphone) may provide a capturing function (for example, a camera application) using at least one camera or an image sensor (for example, a camera module).

For example, image processing may be performed on an image (for example, a frame image) captured by the image sensor, based on a hierarchical structure f a camera program module. The camera program module may include a camera application, a camera framework, a camera hardware abstraction layer (HAL), and a kernel layer.

The image processing may be performed by an image signal processor (hereinafter, referred to as an ISP) included in the camera hardware abstraction layer. The ISP may perform image processing through an image pipeline structure. The image pipeline may include function blocks that process a specific part of each pipeline, for example, at least one of auto focus, auto exposure, auto white balance, color adjustment, color conversion, noise reduction, sharpening, image enhancement (for example, high-dynamic-range (HDR)), image scaling (for example, scaler), face detection, and encoding.

### [Disclosure of Invention]

### [Technical Problem]

A camera program module may transfer a request from a camera application (hereinafter, a camera app) to a framework and a hardware abstraction layer according to the layer order and process the same, and transfer back the result to the camera app via a kernel, the camera hardware abstraction layer and the framework. Accordingly, there may be a time difference between the time point at which a user makes a request for changing a camera function and the time point at which an image is processed through the camera program module and then is shown as a result. Further, since the ISP processes the image in units of frames, there may be a pipeline delay according to the frame processing time.

Particularly, in the case of a camera zoom-in or zoom-out function, issues that responsiveness to a camera zoom-in or zoom-out request is slow in real time may occur. For example, when a zoom magnification change request (for example, 2x magnification) is detected in the camera app, the camera app request may be processed in the order of the framework, the hardware abstraction layer, and the kernel, and then the processing result (for example, 2x magnification image) may be transferred to the camera app in the order of the kernel, the hardware abstraction layer, and the framework.

For example, since the camera app acquires the result image after the delay (for example, a total of 165 ms delay) corresponding to the number of frames (for example, a minimum of 5 frames) taken by the ISP to process the image X a frame interval (for example, 33 ms in 30 fps or 100 ms in 10 fps), the user may feel that the camera zoom responsiveness is slow.

Moreover, in a low illustration environment (for example, nighttime environment) where FPS is low, the frame interval (for example, 100 ms) is increased due to the reason such as the time exposure adjustment, resulting in lower zoom responsiveness.

Various embodiments propose a method and an apparatus for improving responsiveness to the camera zoom performance.

However, the problem to be solved by the disclosure is not limited to the above description, and may be variously expanded without departing from the spirit and area of the disclosure.

### [Solution to Problem]

An electronic device according to an embodiment may include a display. The electronic device may include an image sensor. The electronic device may include an image signal processor configured to process frames transferred from the image sensor. The electronic device may include a scaler disposed between an output terminal of the image signal processor and an input terminal of the display. The electronic device may include a processor operatively connected to the image signal processor and the scaler, and a memory configured to store instructions executable by the processor. The instructions according to an embodiment may cause the electronic device, when a camera function is executed, to acquire a first frame of a first zoom magnification from the image sensor. The instructions according to an embodiment may cause the processor to perform control to image-process a second frame to an N^{th} frame at a first zoom magnification while the first frame of the first zoom magnification processed through the image signal processor is output on the display. The instructions according to an embodiment may cause the processor to request the image signal processor for processing the (N+1)^{th} frame, based on a user input requesting displaying at a second zoom magnification different from the first zoom magnification at a time point at which the (N+1)^{th} frame is acquired and transferring, to the scaler, the second zoom magnification request at the time point at which the (N+1)^{th} frame is acquired. The instructions according to an embodiment may cause the scaler to, in the output order of the second frame, scale a second frame processed at the first zoom magnification by the image signal processor to the second zoom magnification requested at the time point of the (N+1)^{th} frame and transfer the second frame to the display.

The electronic device according to an embodiment may cause the processor to image-process a second frame to an N^{th} frame at the first zoom magnification through the image signal processor while the first frame of the first zoom magnification acquired from the image sensor when the camera function is executed is output on the display. The processor according to an embodiment may perform control to request the image signal processor for processing the (N+1)^{th} frame, based on a user input requesting displaying at a second zoom magnification different from the first zoom magnification at the time point at which the (N+1)^{th} is acquired and transferring, to the scaler disposed between an output terminal of the image signal processor and an input terminal of the display, a second zoom magnification request at the time point at which he (N+1)^{th} is acquired. The processor according to an embodiment may control the scaler to, in the output order of the second frame, scale the second frame processed at the first zoom magnification by the image signal processor to the second zoom magnification requested at the time point at which the (N+1)^{th} is acquired and transfer the second frame to the display.

A method of improving a camera zoom performance by an electronic device according to an embodiment may include, when a camera function is executed, acquiring a first frame of a first zoom magnification from an image sensor, performing control to image-process a second frame to an N^{th} frame at a first zoom magnification through the image signal processor while the first frame of the first zoom magnification processed through the image signal processor is output on a display, receiving a user input making a request for displaying a second zoom magnification different from the first zoom magnification at a time point at which an (N+1)^{th} frame is acquired, making a request for processing the (N+1)^{th} frame to the image signal processor, transferring, to the scaler disposed between an output terminal of the image signal processor and an input terminal of the display, a second zoom magnification request at the time point at which the (N+1)^{th} frame is acquired, and in the output order of the second frame, scaling a second frame processed at the first zoom magnification through the image signal processor to the second zoom magnification requested at the time point of the (N+1)^{th} frame and outputting the second frame to the display by the scaler.

A computer-readable recording medium recording a program for implementing a method of improving a camera zoom performance by an electronic device according to an embodiment may be included.

### [Advantageous Effects of Invention]

An electronic device, a method, and a recording medium according to various embodiments may process a target zoom request of a camera app in preference to an ISP output request through a scaler located at the ISP output terminal (for example, end), based on the zoom request of the camera app, thereby reducing a pipeline delay time of the ISP and improving a responsiveness.

In addition, various effects directly or indirectly detected through the document can be provided.

### [Brief Description of Drawings]

FIG. 1 is a block diagram of an electronic device within a network environment according to an embodiment.
FIG. 2 is a block diagram illustrating a camera module according to various embodiments.
FIGS. 3A and 3B are diagrams illustrating a pipeline delay of an image signal processor according to a comparative embodiment.
FIG. 4 is a diagram illustrating a configuration of the electronic device including an image sensor according to various embodiments.
FIG. 5 is a diagram schematically illustrating a configuration of the camera program module of the electronic device according to an embodiment.
FIG. 6 illustrates a method of improving the camera zoom in performance of the electronic device according to an embodiment.
FIG. 7 illustrates an example of frame processing operations when the electronic device makes a request for camera zoom in according to an embodiment.
FIG. 8 illustrates a method of improving the camera zoom in performance of the electronic device according to an embodiment.
FIGS. 9A to 9C illustrate examples of frame processing operations when the electronic device makes a request for zooming in the camera according to an embodiment.
FIG. 10 illustrates a method of improving the camera zoom out performance of the electronic device according to an embodiment.
FIG. 11 is a diagram illustrating an image margin rate according to an embodiment.
FIG. 12 illustrates an example of frame processing operations when the electronic device makes a request for zooming out the camera according to an embodiment.
FIG. 13 illustrates a method of improving the camera zoom out performance of the electronic device according to an embodiment.
FIG. 14 illustrates an example of frame processing operations when the electronic device makes a request for zooming out the camera according to an embodiment.
FIG. 15 is a method of improving the camera zoom out performance of the electronic device according to an embodiment.
FIGS. 16A to 16C illustrate examples of frame processing operations when the electronic device makes a request for zooming out the camera according to an embodiment.
FIG. 17 illustrates a method of improving the camera zoom in and out performance of the electronic device according to an embodiment.

### [Mode for the Invention]

An electronic device according to embodiments disclosed in the disclosure may be various forms of devices. The electronic device may include, for example, a portable communication device (for example, a smartphone), a computer device, a portable multimedia device, a portable medical device, a camera, a wearable device, or a home appliance. The electronic device according to embodiments of the disclosure is not limited to those described above.

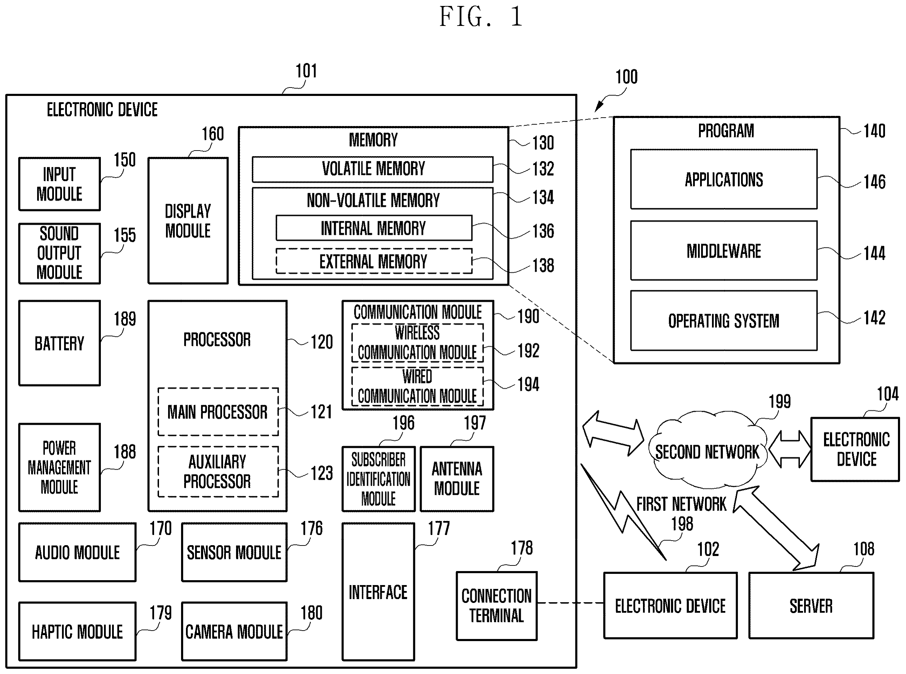

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

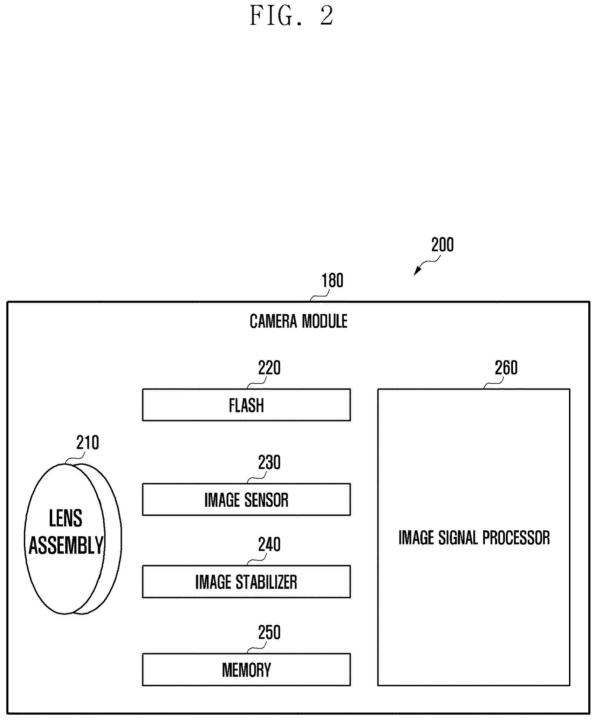

FIG. 2 is a block diagram illustrating a camera module according to various embodiments.

Referring to FIG. 2, the camera module 180 may include a lens assembly 210, a flash 220, an image sensor 230, an image stabilizer 240, a memory 250 (for example, a buffer memory), or an image signal processor 260.

The lens assembly 210 may collect light radiated from a subject of which an image is captured. The lens assembly 210 may include one or more lenses. According to an embodiment, the camera module 180 may include a plurality of lens assemblies 210. In this case, the camera module 180 may form, for example, a dual camera, a 360-degree camera, or a spherical camera. Some of the plurality of lens assemblies 210 may have the same lens attributes (for example, a viewing angle, a focal distance, an automatic focus, an f number, or optical zoom), or at least one lens assembly may have one or more lenses attribute different from another lens assembly. The lens assembly 210 may include, for example, a wide-angle lens or a telephoto lens.

The flash 220 may emit light used to reinforce light radiated or reflected from a subject. According to an embodiment, the flash 220 may include one or more light emitting diodes (for example, red-green-blue (RGB)) LED, white LED, infrared LED, or ultraviolet LED), or a xenon lamp. The image sensor 230 may acquire an image corresponding to the subject by converting light radiated or reflected from the subject and transmitted through the lens assembly 210 into an electrical signal. According to an embodiment, the image sensor 230 may include, for example, one image sensor selected from image sensors having different attributes such as an RGB sensor, a black and white (BW) sensor, an IR sensor, or a UV sensor, a plurality of image sensors having the same attributes, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move at least one lens included in the lens assembly 210 or the image sensor 230 in a specific direction or control an operation characteristic (for example, control read-out timing or the like) of the image sensor 230 in reaction to movement of the camera module 180 or the electronic device 101 including the same. This may compensate for at least some of the negative effects by the movement for the image.

According to an embodiment, the image stabilizer 240 may detect the movement of the camera module 180 or the electronic device 101 by using a gyro sensor (not shown) or an acceleration sensor (not shown) arranged inside or outside the camera module 180. According to an embodiment, the image stabilizer 240 may be implemented as, for example, an optical image stabilizer.

The memory 250 may at least temporarily store at least some of the images acquired through the image sensor 230 for next image processing. For example, when image acquisition according to a shutter is delayed or a plurality of images are acquired at a high speed, the acquired original image (for example, a Bayer-patterned image or an image having a high definition) may be stored in the memory 250, and a duplicate image corresponding thereto (for example, an image having a low definition) may be previewed through the display module 160. Thereafter, when a predetermined condition is satisfied (for example, a user input or a system command), at least some of the original image stored in the memory 250 may be acquired and processed by, for example, the image signal processor 260. According to an embodiment, the memory 250 may be configured as at least a portion of the memory 130 or a separate memory operated independently therefrom.

The image signal processor 260 may perform one or more image processing for the image acquired through the image sensor 230 or the image stored in the memory 250. The one or more image processing may include, for example, depth map generation, three-dimensional modeling, panorama generation, key point extraction, image synthesis, or image compensation (for example, noise reduction, resolution adjustment, brightness adjustment, blurring, sharpening, or softening). Additionally or alternatively, the image signal processor 260 may perform control (for example, exposure time control, read-out timing control, or the like) for at least one of the components (for example, the image sensor 230) included in the camera module 180. For additional processing, the image processed by the image signal processor 260 may be stored again in the memory 250 or provided to an external component (for example, the memory 130, the display module 160, the electronic device 102, the electronic device 104, or the server 108) of the camera module 180.

According to an embodiment, the image signal processor 260 may be configured as at least a portion of the processor 120 or a separate processor operated independently from the processor 120. When the image signal processor 260 is configured as the separate processor from the processor 120, at least one image processed by the image signal processor 260 may be displayed through the display module 160 by the processor 120 as it is or after additional image processing.

According to an embodiment, the electronic device 101 may include a plurality of camera modules 180 having different attributes or functions. In this case, for example, at least one of the plurality of camera modules 180 may be wide-angle cameras, and at least another may be a telephoto camera. Similarly, at least one of the plurality of camera modules 180 may be a front camera, and at least another may be a rear camera.

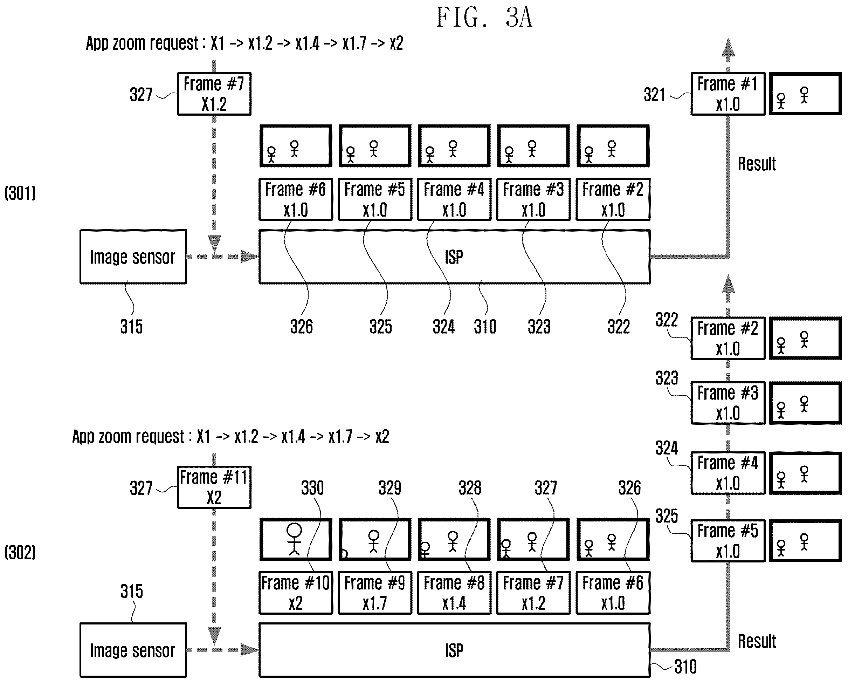

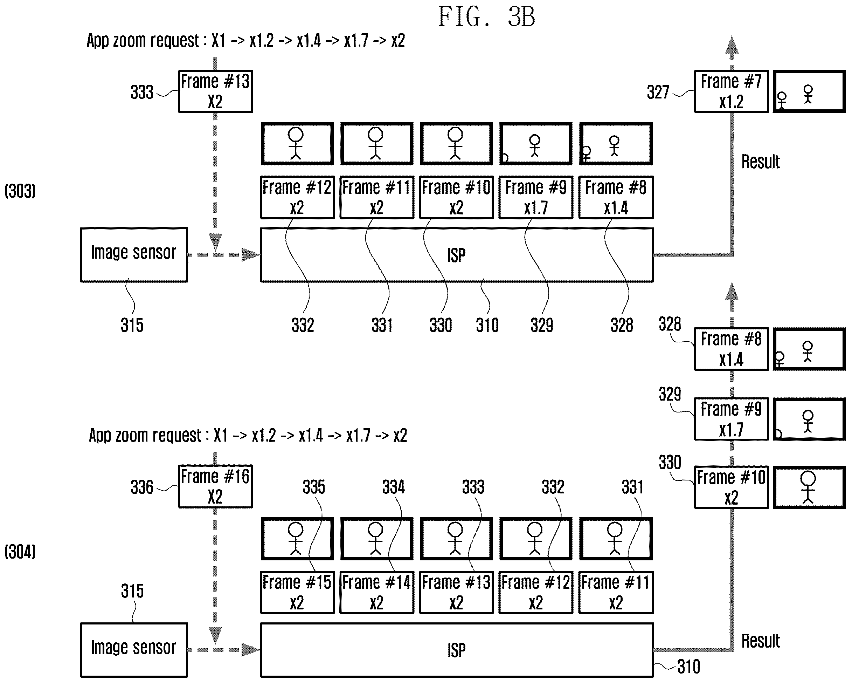

FIGS. 3A and 3B are diagrams illustrating a pipeline delay in the image signal processor according to a comparative embodiment.

Referring to FIGS. 3A and 3B, a camera device (for example, a camera application) according to the comparative embodiment (or the related art) may sequentially process and output consecutive frames acquired from the image sensor 315 through the camera program module in the order of input (for example, frame number).

Input data of the image signal processor (hereinafter, referred to as the ISP) 310 may be an input image (for example, a frame image) acquired from the image sensor 315, and output data of the ISP 310 may be a result image (for example, a preview image or a display image) output to the display. FIGS. 3A and 3B illustrate frame processing orders when a user makes a request for changing a camera zoom function from a 1.0 zoom magnification to a 2.0 zoom magnification. For example, as indicated by reference numeral <301>, the camera application (hereinafter, app) may output a first frame 321 of the 1.0 zoom magnification to the display as a result image (for example, a preview image or a display image). The result image (for example, the preview image or the display image) may be an image obtained after the first frame 321 transferred from the image sensor 315 is processed based on the pipeline structure of the ISP 310 and then result data is transferred to the camera app.

While the first frame 321 is output to the display through the camera app, the ISP 310 may sequentially process frames transferred from the image sensor 315 according to frame numbers (for example, a second frame 322, a third frame 323, a fourth frame 324, a fifth frame 325, and a sixth frame 326). When a user input making a request for a camera function (for example, a zoom magnification change) is received, the camera app may transfer an app zoom request based on the user input to the camera hardware abstraction layer via the framework. The app zoom request may reach a target zoom magnification (for example, x2.0) according to a phased request (for example, x1.0 → x1.2 → x1.4 → x1.7 → x 2.0) in units of frame inputs. The app zoom request may be applied to a pipeline input end (for example, front end) of the ISP 310.

For example, the camera device may receive an input making a request for changing the zoom magnification to the 2.0 zoom magnification at a time point at which a seventh frame 327 is input. The ISP 310 may perform a processing procedure for changing the zoom magnification to the 2.0 zoom magnification, starting at a number of the seventh frame 327.

According to the comparative embodiment, the camera app may transfer the app zoom request to the ISP 310 included in the hardware abstraction layer in a step of a 1.0 zoom magnification, → a 1.2 zoom magnification → a 1.4 zoom magnification → a 1.7 zoom magnification → a 2.0 zoom magnification in order to changing the zoom magnification to the target zoom magnification (for example, 2.0 times).

For example, as indicated by reference numeral <302>, the seventh frame 327 may be requested to be processed by the ISP at the 1.2 zoom magnification. The seventh frame 327 input from the image sensor may be processed and output as an image having the 1.2 magnification by a scaler (for example, an internal scaler) function block included in the pipeline of the ISP 310. Thereafter, an eighth frame 328 may be requested to be processed by the ISP 310 at the 1.4 zoom magnification, and a ninth frame 329 may be requested to be processed by the ISP 310 at the 1.7 zoom magnification. In the next order, a tenth frame 330 may be requested to be processed by the ISP 310 at the 2.0 zoom magnification, and an eleventh frame 331 may be requested to be processed by the ISP 310 at the 2.0 zoom magnification.

As indicated by reference numerals <303> and <304>, the camera app may transfer the app zoom request to the hardware abstraction layer until the image having the size of the 2.0 zoom magnification corresponding to the target zoom magnification is received by the camera app. The camera app may recognize that the zoom magnification reaches the target zoom magnification at a time point at which the tenth frame 330 is received. At a time point at which the camera app receives the tenth frame 330, the ISP 310 may be performing image processing for the eleventh frame 331, a twelfth frame 332, a thirteenth frame 333, a fourteenth frame 334, and a fifteenth frame 335 through the ISP pipeline structure. The camera app may not transfer the app zoom request for the zoom magnification change to the ISP 310, from a sixth frame 366 corresponding to a time point at which the tenth frame 330 that is the image of the 2.0 zoom magnification corresponding to the target zoom magnification is received.

As described above, according to the comparative embodiment, there is an issue that generates a delay due to about 5 frames between a zoom change request time point at which the camera device makes a request for changing the zoom magnification from the 1.0 zoom magnification to the 2.0 zoom magnification and a time point at which the camera app receives a result image processed by the request.

Hereinafter, in various embodiments, an electronic device and methods capable of improving the camera zoom performance of the electronic device will be described.

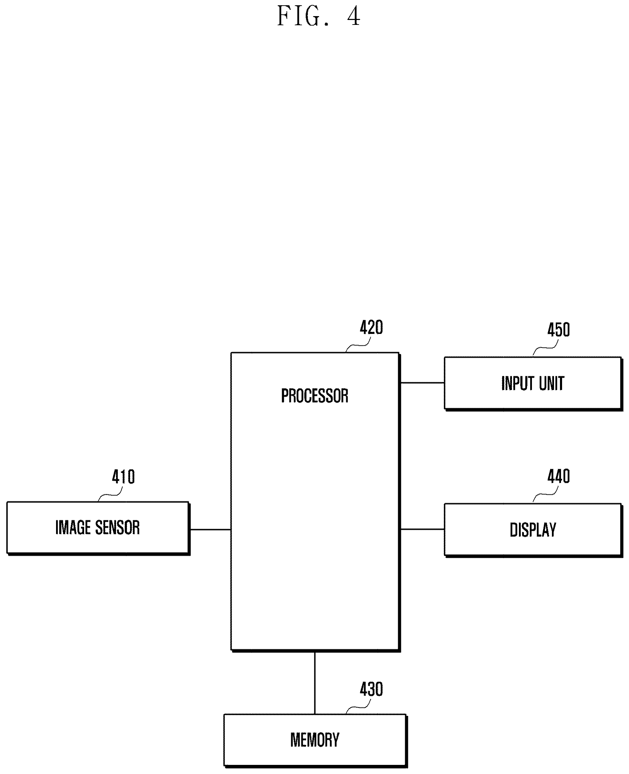

FIG. 4 is a diagram illustrating a configuration of the electronic device including the image sensor according to various embodiments.

Referring to FIG. 4, an electronic device (for example, the electronic device 101 of FIG. 1) according to an embodiment may include an image sensor 410 (for example, the camera module 180 of FIG. 1), a processor 420 (for example, the processor 120 of FIG. 1), a memory 430 (for example, the memory 130 of FIG. 1), a display 440 (for example, the display module 160 of FIG. 1), and an input unit 450 (for example, the input module 160 of FIG. 1). The electronic device 101 of FIG. 4 may further include at least some of the configurations and/or functions of the electronic device 101 of FIG. 1.

According to an embodiment, the image sensor 410 (for example, the image sensor 230 of FIG. 2) may be a configuration included in the camera module 180 of FIG. 1 and FIG. 2. The image sensor 410 may convert an optical signal concentrated by an optical unit into an electrical signal and transfer the same to the processor 420. For example, the image sensor 410 may generate an input image (for example, frame image), based on the optical signal, and transfer the input image to the processor 420. The input image may include Bayer pattern data or RGB data. For example, the image sensor 410 may include a pixel array and a color filter array (for example, Bayer CFA or an RGB filter), and each pixel may include an optical detector for detecting light. The image sensor 410 may generate a single input image including color information (for example, Bayer pattern data or RGB data) for intensity f the light received through the color filter array.

According to an embodiment, the image sensor 410 may include, for example, a charge coupled device (CCD) sensor or a complementary metal oxide semiconductor (CMOS) sensor.

According to an embodiment, the image sensor 410 may include one or more sensors. When the number of image sensors 410 is plural, the image sensors may be implemented to have different functions, performance, or characteristics. For example, the plurality of image sensors 410 may include a plurality of lenses having different fields of view.

According to an embodiment, the display 440 may include the configuration of the display module 160 of FIG. 1. The display 440 may display an image acquired from the image sensor 410, based on data processed by the processor 420. For example, the processor in performing a function related to the camera module or the camera application, the processor 420 may activate the camera module 180 of FIG. 1 or/and the image sensor 410 and may display a result image (for example, a preview image or a display image) processed by the processor 420 (for example, the image signal processor) on the display 440. The processor 420 may display, on the display 440, an image at least partially enlarged or reduced from the image displayed on the display 440 in response to a zoom in or zoom out function request.

According to an embodiment, the display 440 may be configured in an integral type to include a touch panel (not shown) like a touch screen display.

According to an embodiment, the input unit 450 may include the configuration of the input module 150 of FIG. 1. For example, the input unit 450 may be a touch panel corresponding to a partial configuration of the touch screen display. The input unit 450 may receive an input and data for controlling the operation of the electronic device. The input unit 450 may receive a camera driving command, a user input making a request for capturing a picture or a video, or an input making a request for changing an image zoom function (for example, zoom in or zoom out).

According to various embodiments, the memory 430 may store various instructions that can be executed by the processor 420. The instructions may include control commands such as arithmetic and logical operations, data movement, or input and output that may be recognized by the processor 420. The memory 430 may temporarily or permanently various pieces of data by including a volatile memory (for example, the volatile memory 132 of FIG. 1) and a non-volatile memory (for example, the non-volatile memory 134 of FIG. 1).

According to an embodiment, the processor 420 may be operatively, functionally, and/or electrically connected to each component of the electronic device 101 and may be a component capable of performing calculations or data processing related to the control and/or communication of each component. The processor 420 may include at least some of the configurations and/or functions of the processor 120 of FIG. 1 and/or the image signal processor 210 of FIG. 2. Operations performed by the processor 420 may be stored in the memory 430 and may be executed by instructions causing the processor 420 to operate when executed.

According to an embodiment, the processor 420 may control at least one different component related to the function of the electronic device 101 and perform data processing or calculations for image processing. For example, the processor 420 may be an image signal processor (hereinafter, referred to as an ISP) but is not limited thereto, and may be an application processor.

Hereinafter, there is no limitation in the calculations and data processing function that the processor 420 can implement on the electronic device 101, but a series of operations related to the camera zoom function will be described.

According to an embodiment, the processor 420 may enable the camera module or the camera application (hereinafter, app) in response to a camera service execution request. The processor 420 may receive input images acquired from the image sensor and provide image-processed result images to the camera app.

The processor 420 may pass the input image through the ISP pipeline to perform image processing. The ISP pipeline may include function blocks that process a specific part of each pipeline, for example, at least one of auto focus, auto exposure, auto white balance, color adjustment, color conversion, noise reduction, sharpening, image enhancement (for example, high-dynamic-range (HDR)), image scaling (for example, scaler), face detection, and encoding. The ISP pipeline may have different structures depending on a design, and various function blocks related to image processing as well as the above-described function block may be added.

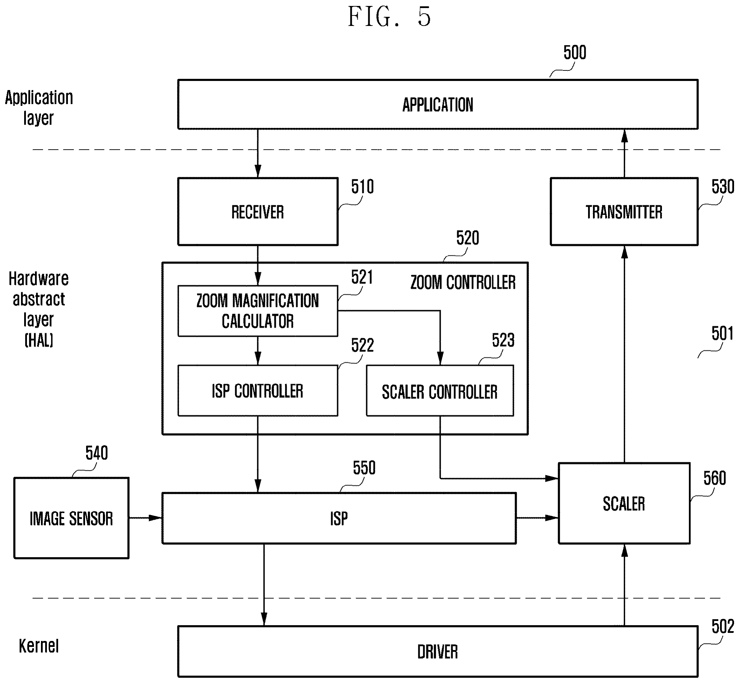

An electronic device 101 according to an embodiment may include a display (for example, the display module 160 of FIG. 1 or the display 440 of FIG. 4), an image sensor (for example, the image sensor 230 of FIG. 2, the image sensor 410 of FIG. 4, or the image sensor 540 of FIG. 5), an image signal processor (for example, the image signal processor 260 of FIG. 2 or the ISP 550 of FIG. 5) the configured to process frames transferred from the image sensor, a scaler (for example, the scaler 560 of FIG. 5) disposed between an output terminal of the image pipeline and an input terminal of the display, and a processor (for example, the processor 120 of FIG. 1 or the processor 420 of FIG. 4) operatively connected to the image signal processor and the scaler, and a memory (for example, the memory 130 of FIG. 1, the memory 250 of FIG. 2, or the memory 430 of FIG. 4), wherein the memory 430 may include instructions that, when a camera function is executed, cause the processor 420 to acquire a first frame of a first zoom magnification from the image sensor 540, perform control to image-process a second frame to an N^{th} frame at the first zoom magnification through the image signal processor 550 while the first frame of the first zoom magnification processed through the image signal processor 550 is output to the display 440, make a request for processing an (N+1)^{th} frame to the image signal processor 550, based on a user input making a request for displaying a second zoom magnification different from the first zoom magnification at a time point at which the (N+1)^{th} frame is acquired, transfer a second zoom magnification request at the time point at which the (N+1)^{th} frame is acquired to the scaler 560, and scale a second frame processed at the first zoom magnification by the image signal processor 550 at the second zoom magnification requested at the time point at which the (N+1)^{th} frame is acquired and transfer the second frame to the display 440 by the scaler in the second frame output order.

The memory 430 according to an embodiment may further include instructions configured to cause the scaler 560 to ignore a zoom magnification of a frame output from the image signal processor 550 and prioritize the second zoom magnification request transferred from the processor 420.

The memory 430 according to an embodiment may further include instructions configured to cause the processor 420 to divide an app zoom request until the first zoom magnification reaches the second zoom magnification into two or more zoom magnification change steps and make a request for the same to the scaler 560 or the image signal processor 550.

The memory 430 according to an embodiment may further include instructions configured to cause the processor 420 to make a request for processing at a zoom magnification corresponding to the app zoom request to the scaler 560 at a time point at which the second frame is output and, simultaneously therewith or in parallel thereto, make a request for processing at the zoom magnification corresponding to the app zoom request to the image signal processor 550 at a time point at which an (N+1)^{th} frame is input.

According to an embodiment, when the user input includes a first touch gesture making a request for zoom in, the second zoom magnification may be configured as a zoom magnification having a size enlarged than the first zoom magnification.

According to an embodiment, when the user input includes a second touch gesture making a request for zoom out, the second zoom magnification may be configured as a zoom magnification having a size reduced than the first zoom magnification.

According to an embodiment, the user input may include a button input or progress bar input making a request for zoom in, and the memory 430 may further include instructions configured to cause the processor 420 to calculate a predicted zoom magnification step expected until the second zoom magnification is configured as a target zoom magnification and the first zoom magnification reaches the second zoom magnification, separately from the zoom magnification change steps, and apply a zoom magnification according to the predicted zoom magnification step to the scaler 560.

The memory 430 according to an embodiment may further include instructions causing the processor 420 to perform control to end an operation of the scaler 560 when a zoom magnification of a frame image-processed through the image signal processor 550 is equal to a zoom magnification corresponding to the user input transferred to the scaler 560.

The memory 430 according to an embodiment may further include instructions causing the processor 420 to control the image signal processor 550 to process an image at a third zoom magnification obtained by applying a margin rate to the first zoom magnification output to the display 440.

The memory 430 according to an embodiment may further include instructions configured to cause the processor 420 to calculate a zoom speed through a difference between the first zoom magnification and the second zoom magnification, control the image signal processor 550 to process the image at a fourth zoom magnification obtained by more increasing the margin rate than the third zoom magnification, and further add a zoom magnification change step between the first zoom magnification and the second zoom magnification.

The scaler 560 according to an embodiment may be configured to crop and output an image of a frame output to the image signal processor 550 according to a zoom magnification request.

FIG. 5 is a diagram schematically illustrating a configuration of the camera program module of the electronic device according to an embodiment.

Referring to FIG. 5, a camera program module of an electronic device (for example, the electronic device 101 of FIG. 1 or the electronic device 101 of FIG. 4) according to an embodiment may operate according to the control of the processor 420 of FIG. 4. The camera program module may be divided into an application layer, a hardware abstraction layer, and a kernel layer. Although not illustrated, the camera program module may further include a framework layer. The framework may call a camera-related library by runtime, and the library may be connected to the hardware abstraction layer through binder communication to operate the camera application (hereinafter, app) or the camera device.

According to an embodiment, the application (for example, the camera app) 500 may play a role of opening and managing a camera to use the camera (for example, the camera module 180 of FIGS. 1 and 2) of the electronic device 101 through a top-level application of the camera program module. For example, the camera app may be application software of receiving an input of a user request related to the camera and showing the result according to the input request through the display.

According to an embodiment, the hardware abstraction layer is an abstraction layer of a camera interface, and may play a role of receiving a user request from an application 500, transferring the same to a driver 502, and transferring back result data according thereto to the application 500.

For example, the hardware abstraction layer is a camera hardware control module, and may include a receiver 510, a transmitter 530, a zoom controller 520, an image signal processor (hereinafter, referred to as an ISP) 550, and a scaler 560.

According to an embodiment, the receiver 510 may play a role of receiving a request (for example, an app zoom request) of the application 500 on the hardware abstraction layer. The receiver 510 may be operationally connected to a zoom magnification calculator 521 and/or an ISP 550. The transmitter 530 may play a role of transferring a result image (for example, a preview image or a display image) transferred from the driver 502 (for example, a camera driver) and processed through the ISP 550 to the application 500. The transmitter 530 may be operationally connected to the scaler 560 and/or the ISP 550.

The zoom controller 520 may include the zoom magnification calculator 521, an ISP controller 522, and a scaler controller 523, but is only an example and is not limited thereto. The zoom controller 520 may perform a function of calculating a zoom magnification step in connection with the camera zoom function, a function of controlling the ISP, and a function of controlling the scaler.

According to an embodiment, the ISP 550 may acquire frames from the image sensor 540 as input data and perform image processing for the frames through the image pipeline according to frame numbers. Input data of the ISP 550 may be frames (for example, input image) acquired from the image sensor 540, and output data of the ISP 550 may be frames (for example, result image or preview image/display image).

According to an embodiment, the ISP controller 522 may control the overall operation of the ISP 550 according to the control of a processor (for example, the processor 420 of FIG. 4). The ISP controller 522 may play a role of controlling function blocks included in the ISP pipeline structure. The function blocks may include, for example, at least one of auto focus, auto exposure, auto white balance, color adjustment, color conversion, noise reduction, sharpening, image enhancement (for example, high-dynamic-range (HDR)), image scaling (for example, scaler), face detection, and encoding, but are not limited thereto.

According to an embodiment, the ISP controller 522 may play a role of transferring the app zoom request corresponding to the user input transferred from the application 500 to the ISP input end and/or a role of playing a future zoom request expected by the zoom magnification calculator 521 to the input end of the ISP 550.

According to an embodiment, the zoom magnification calculator 521 may play a role of calculating a zoom step (for example, a predicted magnification change step) according to a future zoom magnification expected through an algorithm in connection with the zoom in or zoom out function, separately from the zoom step (for example, app magnification change step) according to the app zoom request by the application 500. The zoom magnification calculator 521 may be operationally connected to the scaler connector and/or the receiver.

According to an embodiment, the scaler 560 may be connected to the output end of the ISP 550 and may be located at the image pipeline final end within the ISP 550. The scaler 560 may be operationally connected to the scaler connector 523 of the zoom controller 520. The scaler 560 may perform a function of scaling input images to an image having the size to be displayed on the display or in the image size to be stored.

According to an embodiment, the scaler 560 may ignore the zoom magnification of the image requested by the ISP 550, first apply the zoom magnification requested by the scaler controller 523 to scale (for example, crop) the image, and transfer the same to the transmitter 530.

According to an embodiment, the scaler controller 523 may control the operation of the scaler 560 located at the end of the ISP 550. The scaler controller 523 may transfer information on the target zoom magnification corresponding to the user input transferred from the application 500 to the scaler 560.

The scaler controller 523 may play a role of controlling the scaler 560 to scale (for example, crop) a frame output from the ISP 550 at the predicted zoom magnification calculated by the zoom magnification calculator 521 or at the target zoom magnification transferred from the application 500.

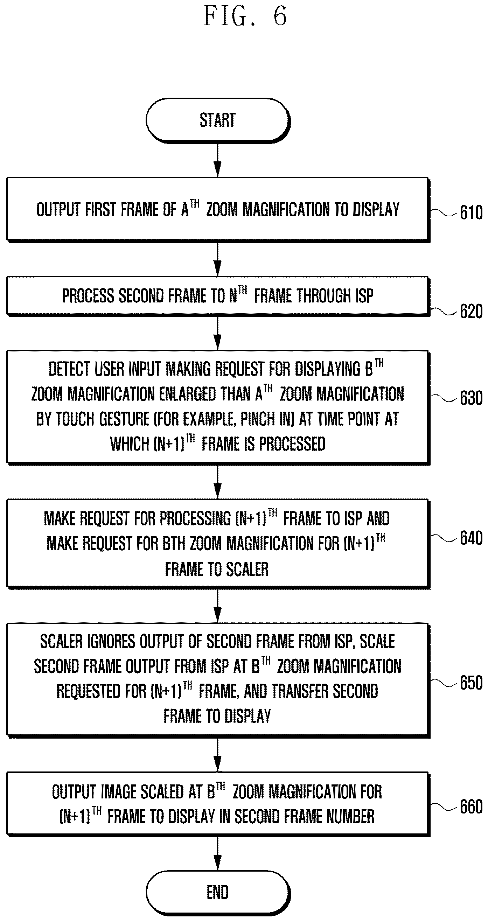

FIG. 6 illustrates a method of improving the camera zoom in performance of the electronic device according to an embodiment.

Referring to FIG. 6, a processor (for example, the processor 120 of FIG. 1 or the processor 420 of FIG. 4) of an electronic device (for example, the electronic device 101 of FIG. 1 or the electronic device 101 of FIGS. 4 and 5) according to an embodiment may output a first frame of am a^{th} magnification to a display (for example, the display module 160 of FIG. 1 (for example, the display 440 of FIG. 4)) when a camera module (for example, the camera module 180 of FIGS. 1 and 2) or a camera application is executed in operation 610. The first frame output to the display is a result image which has been image-processed through the image signal processor 260 of FIG. 2 and/or the image signal processor 550 (hereinafter, referred to as an ISP) of FIG. 5) by a camera app request, and may be a preview image or a display image.

In operation 620, the processor 420 may perform control to image-process a second frame to an N^{th} frame at the a^{th} magnification through the ISP 550 while the first frame is output through the display 440.

In operation 630, the processor 420 may receive a user input making a request for displaying a b^{th} zoom magnification enlarged from the a^{th} zoom magnification by a touch gesture (for example, pinch in) at a time point of an (N+1)^{th} frame input.

For example, when the a^{th} zoom magnification is 1.0 zoom, the b^{th} zoom magnification may be a 2.0 zoom magnification, but it is only an example.

In operation 640, the processor 420 may make a request for processing the (N+1)^{th} frame acquired from an image sensor (for example, the image sensor 230 of FIG. 2, the image sensor 410 of FIG. 4, or the image sensor 540 of FIG. 5) to the ISP 550 and make a request for processing the b^{th} magnification at the time point at which the (N+1)^{th} frame is input to a scaler (for example, the scaler 560 of FIG. 5).

In operation 650, the processor 420 may control the scaler 560 to ignore the zoom magnification output f the second frame output from the ISP 550, scale (for example, crop) the second frame output from the ISP 550 at the b^{th} zoom magnification for the (N+1)^{th} frame, and transfer the same to the display.

In operation 660, the processor 420 may perform control to output the image scaled at the b^{th} zoom magnification requested for the (N+1)^{th} frame to the display according to a second frame number order.

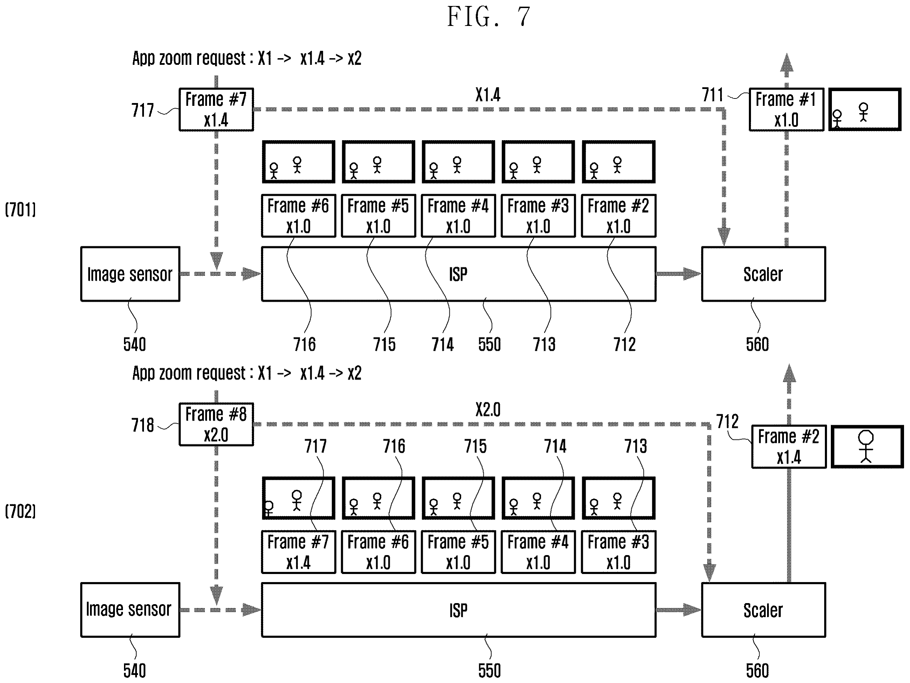

FIG. 7 illustrates an example of frame processing operations when the electronic device makes a request for camera zoom in according to an embodiment.

Referring to FIG. 7, a processor (for example, the processor 120 of FIG. 1 or the processor 420 of FIG. 4) of an electronic device (for example, the electronic device 101 of FIG. 1 or the electronic device 101 of FIGS. 4 and 5) may perform control to output a frame which was image-processed through an ISP (for example, the image signal processor 260 of FIG. 2 or the ISP 550 of FIG. 5) through a camera app as a result image when a camera module (for example, the camera module 180 of FIGS. 1 and 2) or a camera application is executed. The ISP 550 may process input frames according to frame number orders and output image-processed frames to the scaler 560 or a display (not shown) located behind (for example, an output terminal or the end) the ISP 550.

For example, as indicated by reference numeral <701>, while a first frame 711 of the 1.0 zoom magnification is output to the display through a camera app, the ISP 550 may be sequentially processing a second frame 712, a third frame 713, a fourth frame 714, a fifth frame 715, and a sixth frame 716, based on the 1.0 zoom magnification. The ISP 550 may process the second frame 712, the third frame 713, the fourth frame 714, the fifth frame 715, and the sixth frame 716 at the 1.0 magnification and then output a frame having the size of the 1.0 magnification to the scaler 560.

The processor 420 may receive a user input (for example, a touch gesture such as a zoom in gesture or a pin out gesture) making a request for a second zoom magnification (for example, x2.0) from a first zoom magnification (for example, x1.0) at a time point at which a seventh frame 717. The camera app included in the application layer may transfer an app zoom request to the ISP 550 located on the hardware abstraction layer in accordance with a target zoom magnification (for example, x2.0) requested by the user.

According to an embodiment, the processor 420 may make a request for the target zoom magnification (for example, x2.0) to the scaler 560 and control the scaler 560 to ignore the output magnification of the ISP 550 and prioritize the target zoom magnification.

For the second frame 712, a second zoom magnification request (for example, x2.0) when the seventh frame 717 is input may be transferred to the scaler 560.

As indicated by reference numeral <702>, although the second frame 712 is output from the ISP 550 in the size of the 1.0 magnification, the scaler 560 may prioritize the app zoom request (or target zoom request) (for example, x2.0) transmitted to the scaler 560. The scaler 560 may scale (for example, crop) the second frame 712 of the 1.0 magnification which has been image-processed by the ISP 550 to the size of the 2.0 magnification, and output the same to the camera app.

The camera app may output the second frame 712 scaled at the magnification of the app zoom request (or target zoom request) (for example, x2.0) when the seventh frame 717 is input through the display in the displaying order of a number of the second frame 712. The processor 420 may ignore the output zoom magnification of the ISP 550 from a number of third frame 713 and control the scaler 560 to apply the app zoom request (or target zoom request) (for example, x2.0) transferred to the scaler 560.

According to another embodiment, zoom magnification change processing may be configured such that an app zoom request signal reaches the target zoom magnification (for example, x2.0) according to a phased change, for example, x1.0 → x1.2 → x1.4 → x1.7 → x2.0 for the smoothing effect.

For example, when the target zoom magnification is changed to x 2.0, the processor 420 may configure the target zoom magnification as x 2.0 times and control the scaler 560 and the ISP 550 to apply the app zoom request signal from the 1.0 zoom magnification to the 1.2 zoom magnification → the 1.4 zoom magnification → the 1.7 zoom magnification → the 2.0 zoom magnification.

When the processor 420 receives a request for the change from the zoom of 1.0 times to the zoom of 2.0 times at the time point at which the seventh frame 717 is input, the processor 420 may make a request for processing the 1.2 zoom magnification for the seventh frame 717 to the ISP 550 independently from transmitting the app zoom request to the scaler 560, make a request for processing the 1.4 zoom magnification for the eighth frame 178, make a request for processing the 1.7 zoom magnification for the ninth frame (not shown), and make a request for processing the 2.0 zoom magnification for the tenth frame (not shown). In this case, the ISP 550 may output the third frame 713 to the sixth frame 716 as frames having the size of the 1.0 zoom magnification and output the seventh frame 717 at the 1.2 zoom magnification. The eighth frame 718 may be output at the 1.4 zoom magnification, the ninth frame (not shown) may be output at the 1.7 zoom magnification, and the tenth frame (not shown) may be output at the 2.0 zoom magnification.

The processor 420 may gradually (for example, x1.2 → x1.4 → x1.7 → x2.0) make a request for the app zoom request (or target zoom request) to the scaler 560 from the output order of the second frame 712 separately from the frame request processing for the ISP 550.

First, since the request for the 1.2 zoom magnification when the seventh frame 717 is input is applied to the second frame 712 transferred to the scaler 560, the scaler 560 may scale the second frame 712 at the 1.2 zoom magnification rather than the 1.0 zoom magnification of the ISP 550 and transfer the same to the camera app.

In the next order, since information on the 1.4 zoom magnification when the eighth frame 718 is input is applied to the scaler 560 when the third frame 713 is output, the third frame 713 may be transferred to the camera app as a result image of the 1.4 zoom magnification.

Information on the 1.7 zoom magnification when the ninth frame is input may be applied to the scaler 560 when the fourth frame 714 is output, and information on the 2.0 zoom magnification when the tenth frame is input may be applied to the scaler 560 when the fifth frame 715 is output. The camera app may recognize that the zoom magnification reaches the target zoom magnification (for example, x2.0) in the output order of the number of the fifth frame 715. In comparison between FIGS. 3A and 3B described as the comparative embodiment, although the image of the target zoom magnification is output in the tenth frame in the case of FIGS. 3A and 3B, the target zoom magnification is output in the fifth frame and thus it may be identified that zoom responsiveness has been improved in the example of FIG. 7.

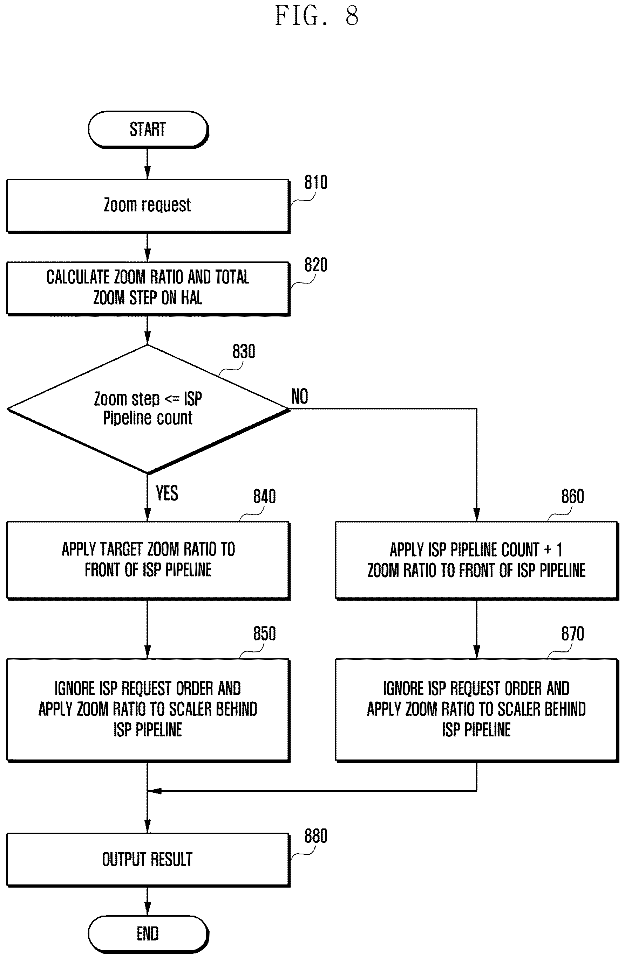

FIG. 8 illustrates a method of improving the camera zoom in performance of the electronic device according to an embodiment.

Referring to FIG. 8, an electronic device (for example, the electronic device 101 of FIG. 1 or the electronic device 101 of FIGS. 4 and 5) according to an embodiment may predict a zoom step (for example, a predicted magnification change step) according to an expected future zoom magnification in accordance with a target zoom magnification, separately from a zoom step (for example, an app magnification change step) according to an app zoom request, based on a configuration, thereby reducing the zoom change step and supporting a function of reducing the ISP delay. For example, when the zoom magnification may be changed by a button input according to a camera application characteristic or when the zoom magnification may be changed by the control of a scroll bar or a progress bar, the zoom step according to the future zoom magnification may be predicted, calculated, or computed.

In operation 810, a processor (for example, the processor 120 of FIG. 1 or the processor 420 of FIG. 4) of the electronic device 101 may receive a zoom request signal in response to a user input making a request for a zoom in change when a camera module (for example, the camera module 180 of FIGS. 1 and 2) or a camera application is executed. The zoom request signal may include target zoom magnification information according to a user request.

The processor 420 may transfers the app zoom request according to the target zoom magnification information to a hardware abstraction layer and control an ISP (for example, the ISP 550 of FIG. 5) to image-process the zoom magnification in units of frames.

In operation 820, the processor 420 may calculate a zoom radio (magnification) to be processed through the ISP 550, and a total zoom step.

The zoom magnification may be applied to an input terminal of the ISP 550 in units of frames. The processor 420 may configure the app zoom request for each frame number in phases until the ISP 550 reaches the target zoom magnification. For example, when a zoom magnification of the current first frame is a 1.0 magnification, the target zoom magnification is 2.0, the processor may be configured to perform image-processing through a phased change from the 1.0 zoom magnification to the 1.2 zoom magnification → the 1.4 zoom magnification → the 1.7 zoom magnification → the 2.0 zoom magnification through the ISP 550. When a user input for changing the magnification to the 2. 0 magnification is received at a time point at which the seventh frame is input, the processor 420 may make a request for processing the seventh frame at the 1.2 magnification to the ISP 550. The processor 420 may make a request for processing the third frame at the 1.4 magnification to the ISP 550, the fourth frame at the 1.7 magnification, and the fifth frame at the 2.0 magnification.

The total zoom step may be the number of future zoom magnifications (for example, predicted zoom steps) predicted until a zoom magnification calculator (for example, the zoom magnification calculator 521 of FIG. 5) reaches the target zoom magnification. The predicted zoom step may be required during a process for the natural smoothing effect for the zoom function.

In operation 830, the processor 420 may determine whether the total zoom step is smaller than a pipeline count of the ISP 550.

The pipeline count of the ISP 550 may be the number of frames taken by the ISP 550 to process an image. For example, the pipeline count of the ISP 550 in the example of FIG. 7 may be "5" corresponding to the number of frames which are being processed by the ISP 550 between the time point at which the seventh frame is input and the time point at which the first frame is output.

When the total zoom step is smaller than or equal to the pipeline count of the ISP 550, the processor 420 may perform control to apply the target zoom magnification to the front (for example, input terminal) of the pipeline of the ISP 550 in operation 840. For example, the processor 420 may perform control to image-process frames input into the ISP 550 at the target zoom magnification.

In operation 850, the processor 420 may ignore the request order of the ISP 550 and perform control to apply the zoom magnification (for example, expected future zoom magnification) according to the zoom request to the scaler 560 located behind (for example, output terminal) the pipeline of the ISP 550.

According to an embodiment, the scaler 560 may receive the image-processed frames from the ISP 550 and, independently therefrom, may receive zoom magnification information according to the target zoom request by the processor 420. The scaler 560 may ignore the zoom magnification information and scale (for example, crop) the result image of the ISP 550 as the zoom magnification information corresponding to the target zoom request.

Operation 840 and operation 580 may be performed in parallel.

When the total zoom step is larger than the ISP pipeline count, the processor 420 may apply a zoom magnification obtained by adding one step to the pipeline count zoom magnification of the ISP 550 to the front of the pipeline of the ISP 550 in operation 870.

In operation 880, the processor 420 may ignore the ISP request order and control the scaler 560 located behind (for example, output terminal) pipeline of the ISP 550 to apply the zoom magnification (for example, the zoom magnification obtained by adding one step to the pipeline count zoom magnification of the ISP 550). In this case, the processor 420 may perform control to scale in consideration of the zoom magnification previously applied to the scaler 560.

In operation 860, the processor 420 may output the image scaled by the scaler 560 through operation 850 or 880. The scaler 560 may transfer the scaled image to the camera application, and the processor 420 may output the scaled image to the display.

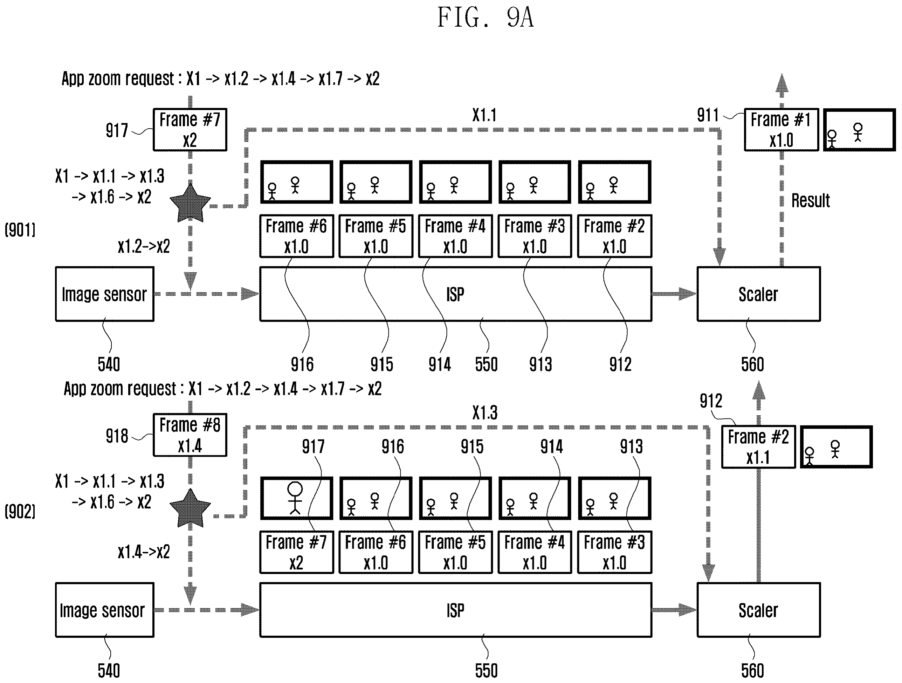

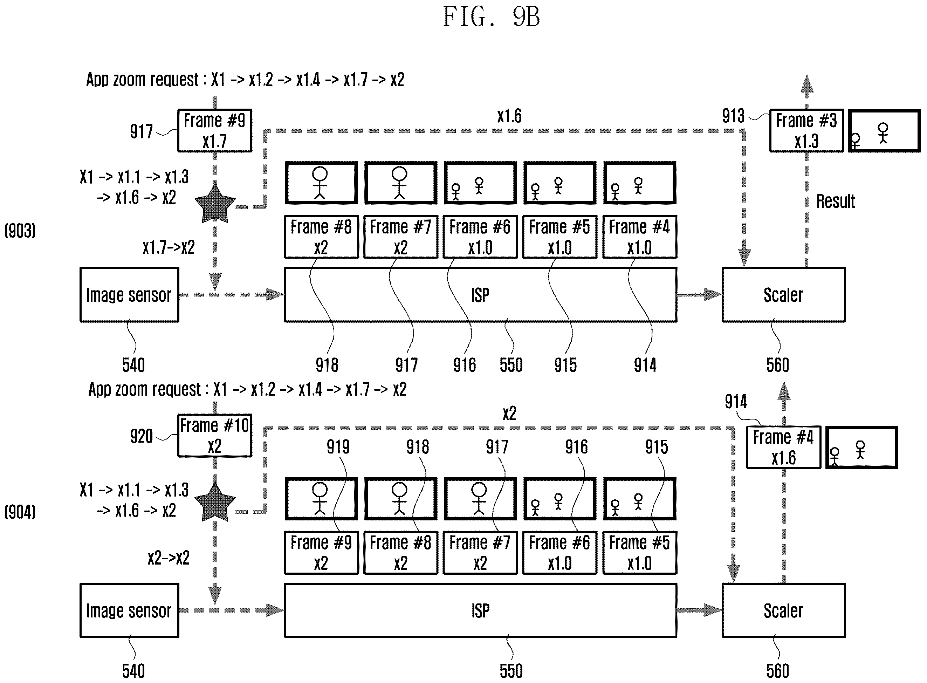

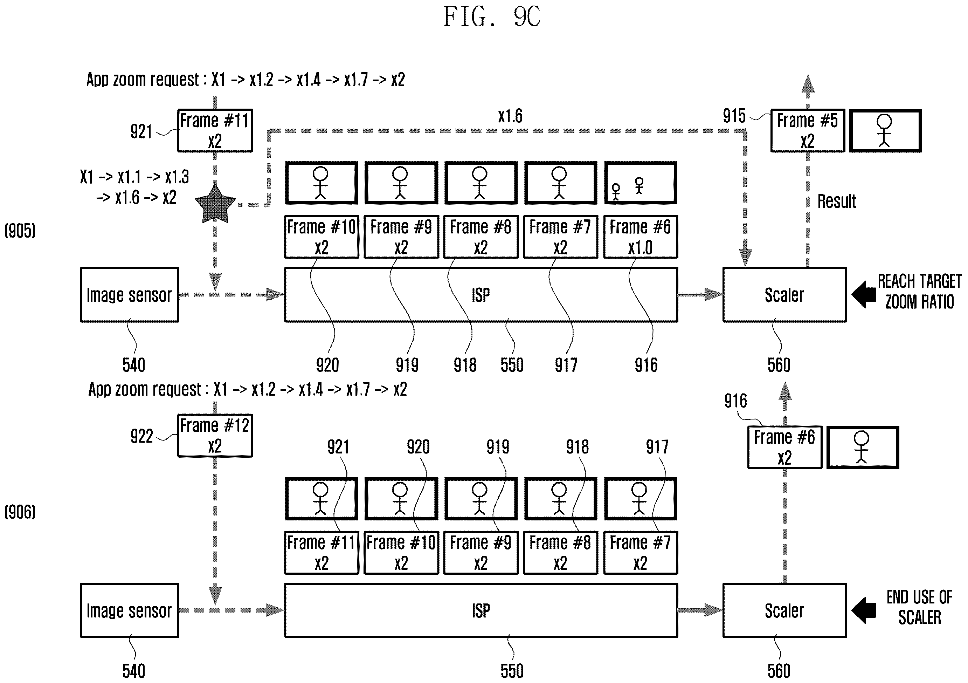

FIGS. 9A to 9C illustrate examples of frame processing operations when the electronic device makes a request for zooming in the camera according to an embodiment.

Referring to FIGS. 9A to 9C, a processor (for example, the processor 120 of FIG. 1 or the processor 420 of FIG. 4) of an electronic device (for example, the electronic device 101 of FIG. 1 or the electronic device 101 of FIGS. 4 and 5) according to an embodiment may support a scaler optimization function.

For example, as indicated by reference numeral <901>, while a first frame 911 of the 1.0 zoom magnification is output to a display (for example, the display module 160 of FIG. 1 (for example, the display 440 of FIG. 4)) through a camera app, the ISP 550 may sequentially process images in the order of a second frame 912, a third frame 913, a fourth frame 914, a fifth frame 915, and a sixth frame 916, based on the 1.0 zoom magnification.

The processor 420 may receive a user input (for example, a button input or a progress bar input) making a request for a second zoom magnification (for example, a 1.4 magnification or a 2.0 magnification) from a first zoom magnification (for example, a 1.0 magnification) at the time point at which the seventh frame 717 is input.

In general, when the target zoom magnification is changed to the 2.0 zoom magnification, the processor 420 may configure the app zoom request to be applied to the ISP 550 in phases from the 1.0 zoom magnification to the 1.2 zoom magnification → the 1.4 zoom magnification → the 1.7 zoom magnification → the 2.0 zoom magnification.

In order to minimize steps of the target zoom magnification transferred from the camera app, the processor 420 may newly configure a predicted zoom magnification step (for example, a predicted zoom step) applied to the scaler 560 of the hardware abstraction layer except for the app zoom request for the app request as well as the app zoom request step change for the app request. For example, the processor 420 may perform control to calculate the predicted zoom step (a total of 5 steps) of the 1.0 zoom magnification → the 1.3 zoom magnification → the 1.6 zoom magnification → the 2.0 zoom magnification from the phased change of the 1.0 zoom magnification → the 1.2 zoom magnification → the 1.4 zoom magnification → the 1.7 zoom magnification → the 2.0 zoom magnification according to the app zoom request and apply the predicted zoom step to the scaler 560 located behind the ISP 550.

At this time, the processor 420 may perform control to apply 2.0 times corresponding to the target zoom magnification to the front end (for example, input terminal) of the ISP. The processor 420 may make a request for applying the newly calculated predicted zoom magnification to the scaler 560 for step (x1.1→ x1.3→ x1.6→x2.0) from the time point at which the seventh frame 917 is input.

First, when the seventh frame 917 is input and the second frame 912 is output, the processor 420 may transfer request for the 1.1 zoom magnification to the scaler 560 and, simultaneously therewith or independently therefrom, control the ISP 550 to process the seventh frame 917 at the 2.0 zoom magnification.

As indicated by reference numeral <902>, the scaler 560 may ignore the zoom magnification (1.0 magnification) of the image of the second frame 912 output from the ISP 550, scale (for example, crop) the second frame 912 output from the ISP 550 at the 1.0 zoom magnification, and output the same.

In the next order, when the ISP 550 outputs the third frame 913, the processor 420 may transfer a request for the 1.3 zoom magnification to the scaler 560 and control the ISP 550 to process the eighth frame 918 at the 2.0 zoom magnification.

As indicated by reference numeral <903>, the scaler 560 may ignore the zoom magnification (1.0 magnification) of the third frame 913 output from the ISP 550, scale (for example, crop) the third frame 913 image-processed by the ISP 550 at the transferred 1.3 zoom magnification, and output the same.

In the next order, when the ISP 550 outputs the fourth frame 914, the processor 420 may perform control to transfer a request for the 1.6 zoom magnification to the scaler 560 and process the ninth frame 919 transferred to the ISP 550 at the 2.0 zoom magnification.

As indicated by reference numeral <904>, the scaler 560 may ignore the zoom magnification (1.0 magnification) of the fourth frame 914 output from the ISP 550, scale (for example, crop) the fourth frame 914 image-processed by the ISP 550 at the transferred 1.6 zoom magnification, and output the same.

In the next order, when the ISP 550 outputs the fifth frame 915, the processor 420 may perform control to transfer a request for the 2.0 zoom magnification to the scaler 560 and process the tenth frame 920 transferred to the ISP 550 at the 2.0 zoom magnification.

As indicated by reference numeral <905>, the scaler 560 may ignore the zoom magnification (1.0 magnification) of the fifth frame 915 output from the ISP 550, scale (for example, crop) the fifth frame 915 image-processed by the ISP 550 at the transferred 1.6 zoom magnification, and output the same.

In the next order, when the ISP 550 outputs the sixth frame 916, the processor 420 may perform control to transfer information on the 2.0 zoom magnification to the scaler 560 and process the eleventh frame 921 transferred to the ISP 550 at the 2.0 zoom magnification.

As indicated by reference numeral <906>, the scaler 560 may ignore the zoom magnification (1.0 magnification) of the sixth frame 916 output from the ISP 550, scale (for example, crop) the sixth frame 916 image-processed by the ISP 550 at the transferred 2.0 zoom magnification, and output the same. As described above, due to the predicted zoom step, the output in the size of the target zoom magnification (for example, x2.0) through the camera app may be identified at the time point at which the fifth frame 915 is output.

In the next order, when the ISP 550 outputs the seventh frame 917, the processor 420 may perform control to transfer information on the 2.0 zoom magnification to the scaler 560 and process the twelfth frame 922 transferred to the ISP 550 at the 2.0 zoom magnification. For the seventh frame 917, the scaler 560 may receive the seventh frame 917 having the size of the 2.0 zoom magnification corresponding to the target zoom magnification from the ISP 550. At this time, since the output magnification of the ISP is the same as the target zoom magnification, the operation of the scaler 560 may be unnecessary.

According to an embodiment, when the output magnification of the ISP is the same as the zoom magnification the processor 420 for which the request is made to the scaler 560, based on the processing result of the ISP 550 or when the camera app receives the frame of the target zoom magnification, the processor 420 may end the operation of the scaler 560 to prevent unnecessary power consumption.

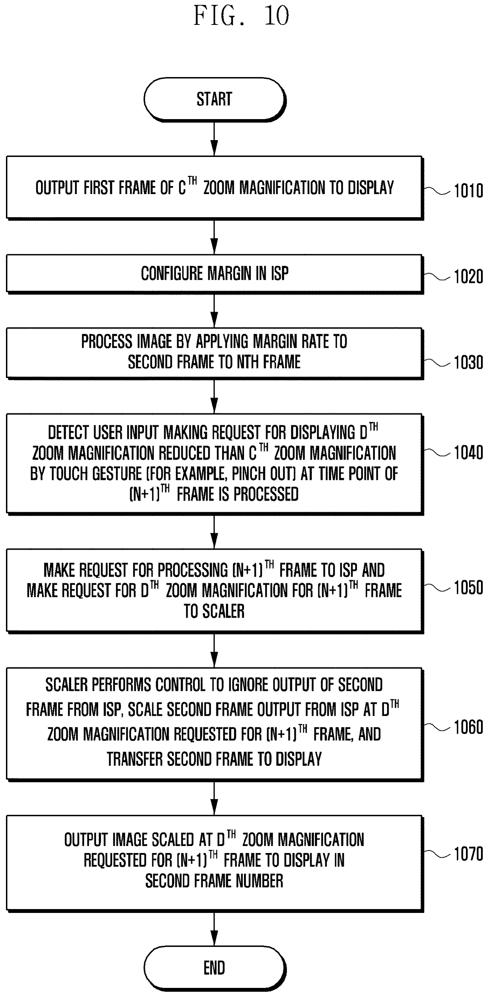

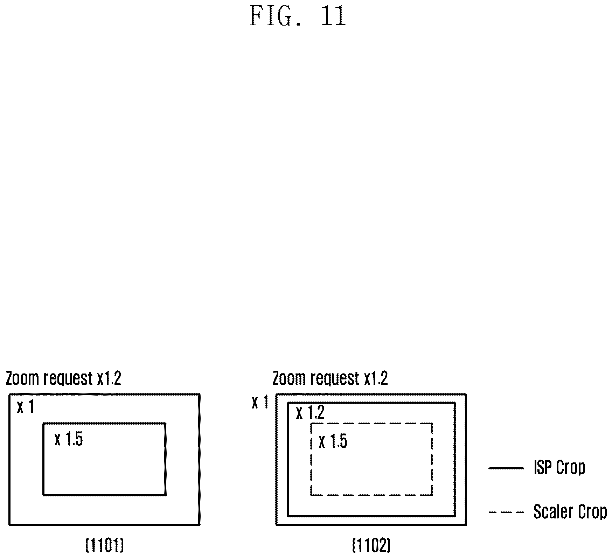

FIG. 10 illustrates a method of improving the camera zoom output performance of the electronic device according to an embodiment, and FIG. 11 is a diagram illustrating an image margin rate according to an embodiment.

Referring to FIG. 10, a processor (for example, the processor 120 of FIG. 1 or the processor 420 of FIG. 4) of an electronic device (for example, the electronic device 101 of FIG. 1 or the electronic device 101 of FIGS. 4 and 5) according to an embodiment may output a first frame of a c^{th} magnification to a display (for example, the display module 160 of FIG. 1 (for example, the display 440 of FIG. 4)) when a camera module (for example, the camera module 180 of FIGS. 1 and 2) or a camera application is executed in operation 1010. The first frame displayed on the display is a result image which has been image-processed through the image signal processor 550 (hereinafter, referred to as an ISP) of FIG. 5 by a camera app request, and may be a preview image or a display image.

According to an embodiment, the process of FIG. 10 may be applied when there is a reduced zoom magnification lower than the zoom magnification displayed on the current display. For example, the c^{th} magnification may be the 2.0 zoom magnification.

In operation 1020, the processor 420 may configure the margin rate to be applied to the ISP 550. The margin rate may be configured as a zoom magnification having the size relatively larger than the size of the zoom magnification displayed on the display.

The processor 420 may perform control to process the image by applying the margin rate based on the c^{th} magnification to a second frame to an N^{th} frame through the ISP 550 while the first frame is output to the display (for example, the display 440 of FIG. 4) in operation 1030.

For example, as indicated by reference numeral <1101> of FIG. 11, in comparison between the case where image data of the 1.0 magnification is stored as a frame image and the case where image data of the 1.5 magnification is stored, when a 1.2 magnification change is received through a zoom request, an image of the 1.2 magnification can be generated by being cropped from the image of the 1.0 magnification in the case where the image of the 1.0 magnification is stored, but the image of the 1.2 magnification cannot be generated in the case where the image of the 1.5 magnification is stored.

For the zoom out function, the processor 420 may additionally apply the margin rate, based on the zoom magnification of the current frame as indicated by reference numeral <1102>. For example, when the current frame is displayed at the 1.5 zoom magnification, the ISP may be configured to process the frame at the margin rate of the 1.2 zoom magnification. The ISP may crop the frame at the 1.2 zoom magnification having the size larger than the 1.5 zoom magnification to perform image processing without image processing at the 1.5 zoom magnification, and then output the same to the scaler 560. Thereafter, the scaler 560 may crop the frame at the 1.5 zoom magnification and output the same.

In operation 1040, the processor 420 may receive a user input making a request for displaying a reduced d^{th} zoom magnification lower than the c^{th} zoom magnification by a touch gesture (for example, pinch out) at the time point at which the (N+1)^{th} frame is input.

For example, when the c^{th} zoom magnification is the 2.0 zoom magnification, the d^{th} zoom magnification may be the 1.4 zoom magnification, but is only an example.

In operation 1050, the processor 420 may make a request for processing the (N+1)^{th} frame captured by an image sensor (for example, the image sensor 230 of FIG. 2, the image sensor 410 of FIG. 4, or the image sensor 540 of FIG. 5) through the ISP 550 and make a request for the processing at the d^{th} magnification requested for the (N+1)^{th} frame to the scaler 560.

In operation 1060, the processor 420 may control the scaler 560 to ignore the zoom magnification output of the second frame output from the ISP 550, scale the second frame output from the ISP 550 at the d^{th} zoom magnification requested for the (N+1)^{th} frame, and transfer the same to the display.

In operation 1070, the processor 420 may perform control to output the image scaled at the d^{th} zoom magnification requested when the (N+1)^{th} frame is processed to the display according to a second frame number order.

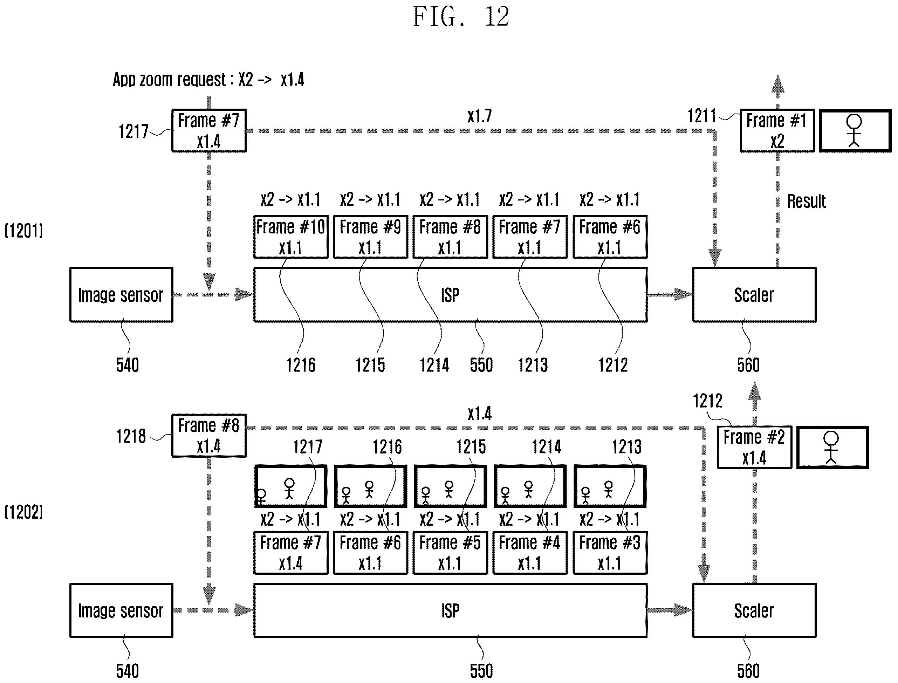

FIG. 12 illustrates an example of frame processing operations when the electronic device makes a request for zooming out the camera according to an embodiment.

Referring to FIG. 12, while a processor (for example, the processor 120 of FIG. 1 or the processor 420 of FIG. 4) of an electronic device (for example, the electronic device 101 of FIG. 1 or the electronic device 101 of FIGS. 4 and 5) according to an embodiment outputs a first frame 1211 of a 2.0 zoom magnification to a display (for example, the display module 160 of FIG. 1 (for example, the display 440 of FIG. 4) through a camera app as indicated by reference numeral <1201>, the ISP 550 may image-process frames by applying a margin rate, based on a 1.0 zoom magnification. For example, an app zoom request transferred from the camera app may be the 2.0 zoom magnification, but the processor may configure the margin rate in the ISP to process a second frame 1212, a third frame 1213, a fourth frame 1214, a fifth frame 1215, and a sixth frame 1216 to be the size having a margin rate of a 1.1 magnification.

The ISP 550 may output the second frame 1212, the third frame 1213, the fourth frame 1214, the fifth frame 1215, and the sixth frame 1216 to the scaler 560 as frames having the size of the 1.1 zoom magnification.

The processor 420 may receive a user input (for example, a touch gesture such as a zoom in gesture or a pinch out gesture) making a request for changing the zoom magnification from the 2.0 zoom magnification to a 1.4 zoom magnification at the time point at which a seventh frame 1217 is input. The camera app included in the application layer may be transfer an app zoom request to the ISP 550 located on the hardware abstraction layer in accordance with a target zoom magnification (for example, x1.4) requested by the user.

The processor 420 may make a request for (or transfer) the target zoom magnification (for example, 1.4 zoom magnification) to the scaler 560, and simultaneously therewith or independently therefrom, make a request for processing the seventh frame 1217 at the 1.4 zoom magnification to the ISP 550. The scaler 560 may ignore the output magnification of the ISP 550 and perform control to prioritize the app zoom request (or target zoom magnification (for example, x1.4).

As indicated by reference numeral <1202>, when the second frame 1213 is output, the scaler 560 may receive the second frame 1213 having the size of the 1.1 zoom magnification from the ISP 550 or scale (for example, crop) the second frame 1212 which has been image-processed by the ISP 550 to be output in the size of the 1.4 magnification and output the same to the camera app. In the next order, target zoom magnification information when an eighth frame 1218 is input may be requested to be processed to the scaler 560 and the ISP 550.

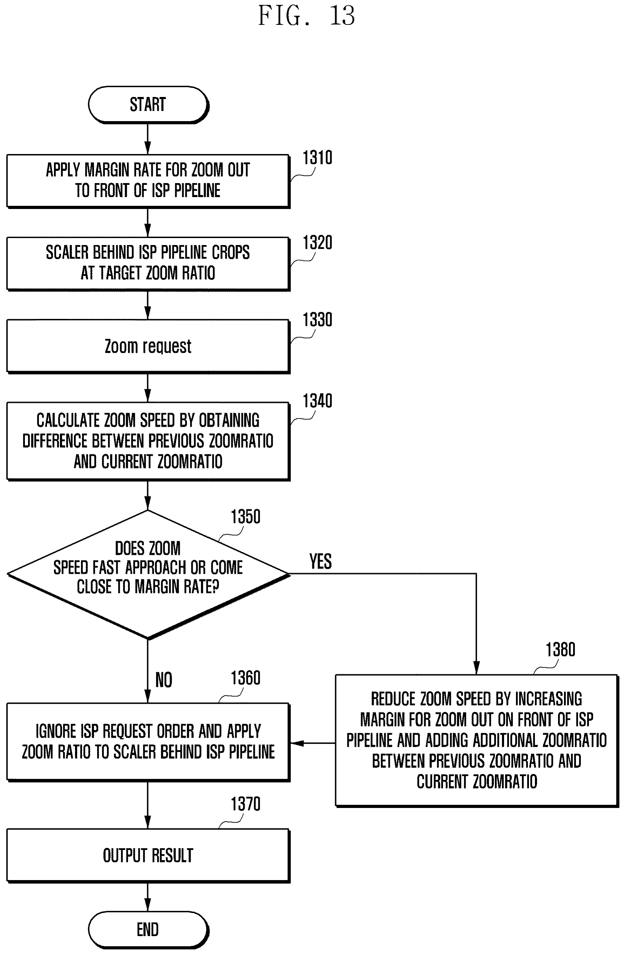

FIG. 13 illustrates a method of improving the camera zoom out performance of the electronic device according to an embodiment.

Referring to FIG. 13, in operation 1310, a processor (for example, the processor 120 of Fig. 1 or the processor 420 of FIG. 4) of the electronic device 101 may configure a margin rate for a zoom out function to be applied to the front (for example, the input terminal) of the ISP pipeline.

In operation 1320, the processor 420 may configure a scaler (for example, the scaler 560 of FIG. 5) located behind (for example, the output terminal) the ISP pipeline to crop the frame output from the ISP at a target zoom magnification (for example, app zoom request) for the zoom out function.

In operation 1330, when a camera module (for example, the camera module 180 of FIGS. 1 and 2) or a camera application is executed, the processor 420 may receive a zoom request signal in response to a user input making a request for zoom out. The zoom request signal may include target zoom magnification information according to a user request.

The processor 420 may transfers the app zoom request according to the target zoom magnification information to a hardware abstraction layer and control an ISP (for example, the ISP 550 of FIG. 5) to image-process the zoom magnification in units of frames.

In operation 1340, the processor 420 may calculate a zoom speed by obtaining a difference between the previous zoom magnification and the current zoom magnification. In operation 1350, the processor 420 may determine whether the zoom speed approaches fast the margin or is in proximity thereto.

When zoom speed does not approach fast the margin or is not in proximity thereto, the processor 420 may control the scaler 560 located behind the ISP pipeline to ignore the ISP request and apply the zoom magnification for which the request is made to the current scaler to the scaling in operation 1360.

In operation 1370, the processor 420 may output the image scaled by the scaler 560. The scaler 560 may transfer the scaled image to the camera application, and the processor 420 may output the scaled image to the display.

When the zoom speed fast approaches or comes close to the margin, the processor 420 may perform control to more increase the margin rate for zoom out on the front (for example, input terminal) of the ISP pipeline and adding a zoom magnification between the previous zoom magnification and the current zoom magnification to reduce the zoom speed in operation 1380, and then proceed to operation 1360.

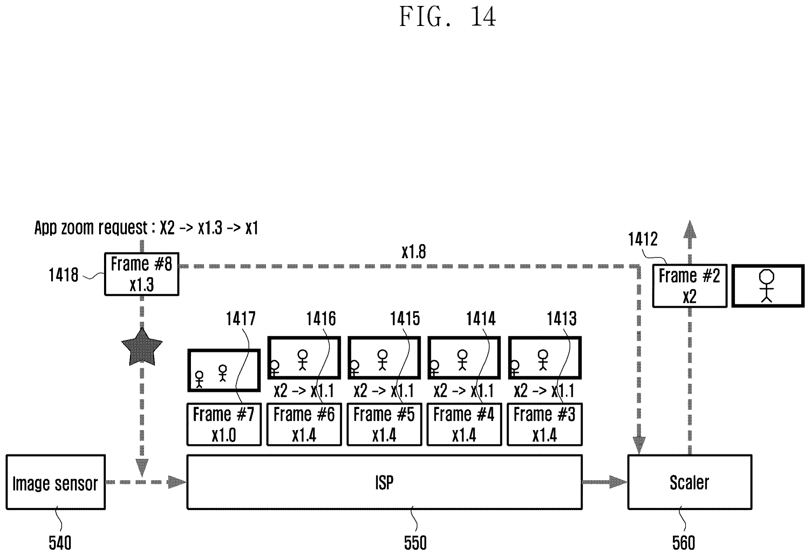

FIG. 14 illustrates an example of frame processing operations when the electronic device makes a request for zooming out the camera according to an embodiment.

Referring to FIG. 14, when a future zoom magnification can be predicted like pinch zoom, the electronic device 101 according to an embodiment may support a function preventing the phenomenon of stopping processing of zoom out by newly generating a future zoom step expected using the current zoom magnification, the previous zoom magnification, and the margin zoom magnification. For example, when the zoom magnification may be changed by a button input according to a camera application characteristic or when the zoom magnification may be changed by the control of a scroll bar or a progress bar, the zoom step according to the future zoom magnification may be predicted, operated, or calculated.

For example, when the current zoom magnification for the second frame 1412 is 2.0 and the app zoom request transferred from an eighth frame 1418 to the scaler 560 is the 1.3 zoom magnification, the margin rate for zoom out may be configured as the 1.4 magnification.

A third frame 1413, a fourth frame 1414, a fifth frame 1415, and a sixth frame 1416 which have been image-processed by the ISP 550 may be transferred to the scaler 560 as an output image having the size of the margin rate of the 1.4 zoom magnification. However, since the app zoom request requested by the camera app corresponds to the 1.3 zoom magnification, it is smaller than the size currently output from the ISP 550 and thus cannot be immediately applied to scaling of the 1.3 zoom magnification.

The processor 420 may identify the current zoom magnification, the previous zoom magnification, and the margin zoom magnification and, when the processing speed of the ISP 550 is fast or escapes the zoom out margin rate in connection with the zoom out function, may change the zoom margin rate again or make a change such that the ISP 550 performs image processing at the maximum margin (for example, 1.0 zoom magnification). For example, from the order of the seventh frame 1417, the processor 420 may configure the processing at the zoom margin rate of 1.0 magnification at the front end of the ISP 550.

In the next order, the processor 420 may additionally transfer the 1.8 zoom magnification larger than the 1.3 zoom magnification to the scaler 560 at the time point at which the eighth frame 1418 is input, and the processor 420 may generate a zoom change step until the output image transferred from the ISP 550 reaches the 1.3 zoom margin rate and transfer the same to the scaler 560. For example, the processor 420 may transfer the 1.8 zoom magnification to the scaler 560 at the time point at which the third frame 1413 is output in order to ignore the output of the third frame 1413 requested by the ISP 550. In the next order, the processor 420 may make a change such that the 1.7 zoom magnification is transferred at the time point at which the fourth frame 1414 is output, the 1.5 zoom magnification is transferred to the scaler 560 at the time point at which the fifth frame 1415 is output, the 1.4 zoom magnification is transferred at the time point of the sixth frame 1416, and the 1.3 magnification is transferred at the time point of the seventh frame 1417.

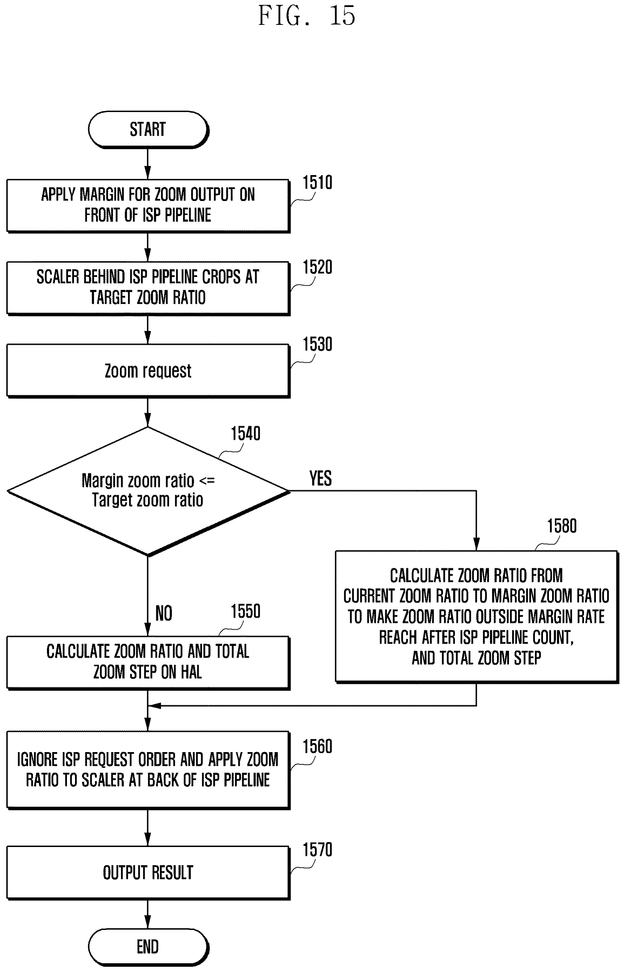

FIG. 15 is a method of improving the camera zoom out performance of the electronic device according to an embodiment.

Referring to FIG. 15, in operation 1310, a processor (for example, the processor 120 of FIG. 1 or the processor 420 of FIG. 4) of the electronic device 101 may configure a margin rate for a zoom out function to be applied to the front (for example, the input terminal) of the ISP pipeline.

In operation 1520, the processor 420 may configure a scaler (for example, the scaler 560 of FIG. 5) located behind (for example, the output terminal) the ISP pipeline to crop at a target zoom magnification (for example, app zoom request magnification) for the zoom out function.

In operation 1530, when a camera module or a camera application is executed, the processor 420 may receive a zoom request signal in response to a user input making a request for zoom out.

In operation 1540, the processor 420 may determine whether the margin zoom magnification is smaller than or equal to the target zoom magnification. In operation 1550, when the margin zoom magnification is smaller than or equal to the target zoom magnification, the processor 420 may calculate a zoom radio (magnification) to be processed through the ISP 550, and a total zoom step.

The zoom magnification may be applied to an input terminal of the ISP 550 in units of frames. The processor 420 may configure the zoom magnification in phases until the ISP 550 reaches the target zoom magnification. For example, at the time point at which the seventh frame is input, a zoom out request for changing the magnification to the 1.0 magnification may be received. The app zoom (app zoom request) transferred from the camera app to the ISP may be requested in steps of the 2.0 zoom magnification → 1.7 zoom magnification → 1.4 zoom magnification → 1.2 zoom magnification → 1.0 magnification.

The total zoom step may be the number of future zoom magnifications (for example, predicted zoom steps) predicted until the magnification reaches the target zoom magnification calculated by a zoom magnification calculator (for example, the zoom magnification calculator 521 of FIG. 5). The predicted zoom step may be required during a process for the natural smoothing effect for the zoom function.

In operation 1560, the processor 420 may ignore the request order of the ISP 550 and perform control to apply the zoom magnification (for example, expected future zoom magnification) to the scaler 560 located behind (for example, output terminal) the pipeline of the ISP 550.

According to an embodiment, the scaler 560 may receive the image-processed frames from the ISP 550 and, independently therefrom, may receive zoom magnification information according to the target zoom request by the processor 420. The scaler 560 may ignore the zoom magnification information and scale (for example, crop) the result image of the ISP 550 as the zoom magnification information corresponding to the target zoom request.

In operation 1570, the processor 420 may output the image scaled by the scaler 560. The scaler 560 may transfer the scaled image to the camera application, and the processor 420 may output the scaled image to the display.

In operation 1580, when the margin zoom magnification is larger than the target zoom magnification, the processor 420 may calculate the zoom magnification and the total zoom step from the current zoom magnification to the margin zoom magnification so that the zoom magnification outside the margin rate may reach after the ISP pipeline count, and proceed to operation 1560 to apply the same to the scaler 560.

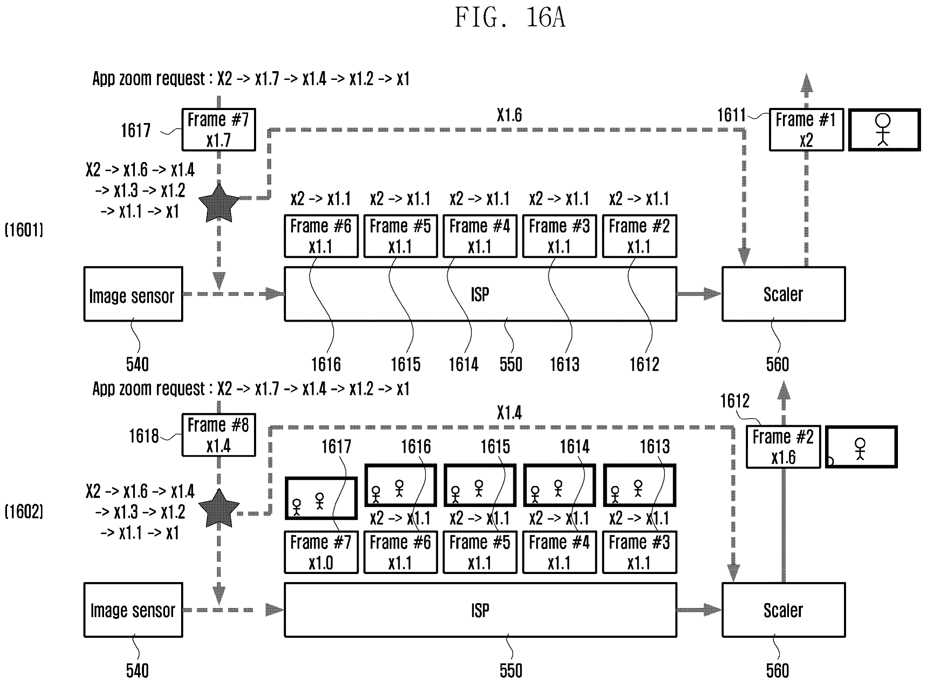

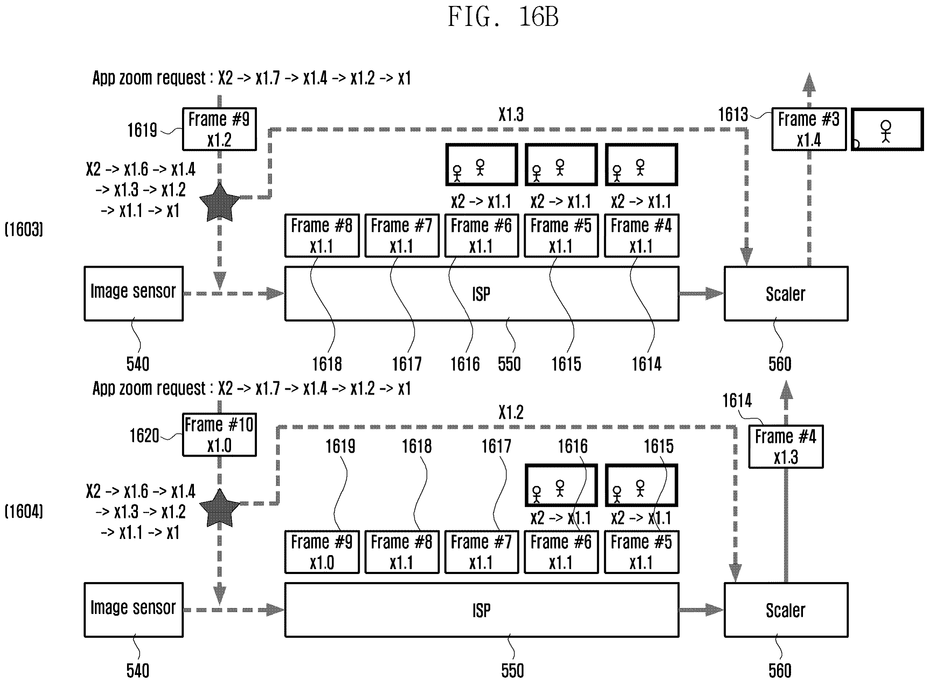

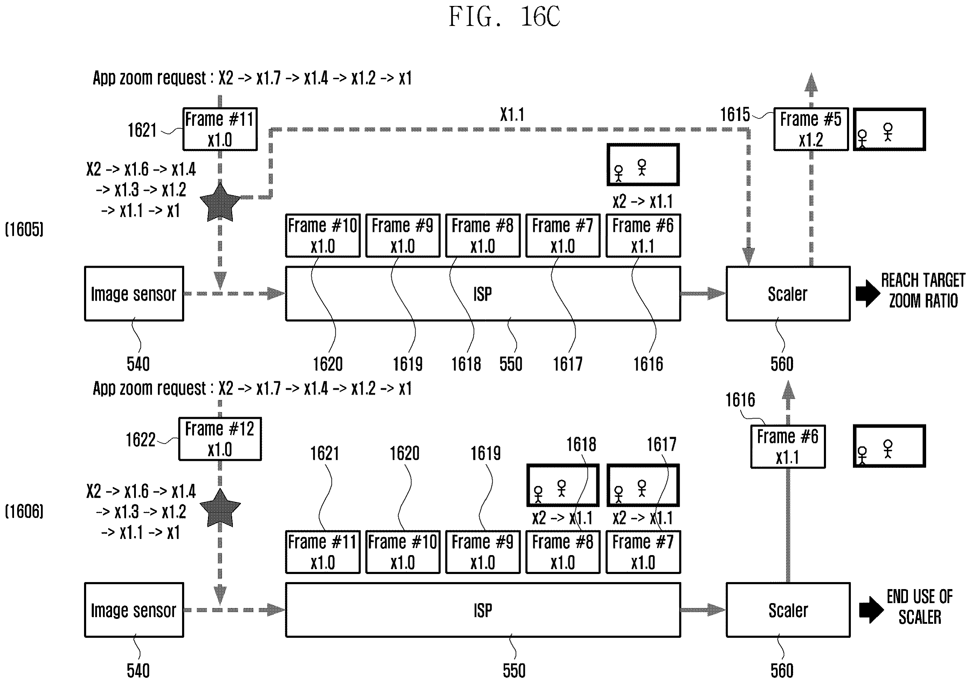

FIGS. 16A to 16C illustrate examples of frame processing operations when the electronic device makes a request for zooming out the camera according to an embodiment.

Referring to FIGS. 16A to 16C, a processor (for example, the processor 120 of FIG. 1 or the processor 420 of FIG. 4) of an electronic device (for example, the electronic device 101 of FIG. 1 or the electronic device 101 of FIGS. 4 and 5) according to an embodiment may support a function of preventing the stopping phenomenon in zoom out by increasing the zoom magnification step.

For example, as indicated by reference numeral <1601>, the ISP 550 may be configured to sequentially process the frame 912, the third frame 913, the fourth frame 914, the fifth frame 915, and the sixth frame 619 with the margin rate of 1.1 times while a first frame 1611 of the 2.0 zoom magnification is output to a display (for example, the display module 160 of FIG. 1 (for example, the display 440 of FIG. 4)) through a camera app.

In general, when a user input making a request for the change from the 2.0 zoom magnification to the 1.0 zoom magnification is received, the camera app may transfer a app zoom request to the ISP 550 via 4 steps of the 1.7 zoom magnification → the 1.4 zoom magnification → the 1.2 zoom magnification → the 1.0 zoom magnification from the 2.0 zoom magnification.

For the zoom out function, the processor 420 may newly configure a predicted zoom magnification step (for example, a predicted zoom step) applied to the scaler 560 of the hardware abstraction layer as well as the app zoom request for the app request. For example, the processor 420 may perform control to calculate the predicted zoom step (a total of 6 steps) of the 1.6 zoom magnification → the 1.4 zoom magnification, → the 1.3 zoom magnification → the 1.2 zoom magnification → the 1.1 zoom magnification → the 1.0 zoom magnification from the 2.0 zoom magnification from the phased change of the 1.7 zoom magnification → the 1.4 zoom magnification, → the 1.2 zoom magnification → the 1.0 zoom magnification according to the app zoom request and apply the predicted zoom step to the scaler 560 located behind the ISP 550.

At this time, the processor 420 may perform control to apply the 1.1 zoom magnification considering the margin rate to the front end (for example, the input terminal) of the SIP 550. The processor 420 may make a request for applying the newly calculated predicted zoom magnification to the scaler 560 for step (x1.6 → x1.4 → x1.3 → x1.2 → x1.1 → x1.0) from the time point at which the seventh frame 1617 is input.

The processor 420 may make a request for applying the newly calculated predicted zoom magnification to the scaler for step (x1.1 → x1.3 → x1.6 → x2.0) from the time point at which the seventh frame 917 is input.

As indicated by reference numeral <1602>, the scaler 560 may ignore the zoom magnification (1.1 magnification) of second frame 1612 output from the ISP 550, scale (for example, crop) the second frame 1612 processed by the ISP 550 at the 1.1 zoom magnification, and output the same. At this time, the processor 420 may perform control to process the seventh frame 1617 input into the ISP 550 at the 1.0 zoom magnification.

When the third frame 1613 is output, the processor 420 may perform control to transfer 1.4 zoom magnification information to the scaler 560 and process the eight frame 1618 input into the ISP 550 at the 1.0 zoom magnification.

As indicated by reference numeral <1603>, the scaler 560 may ignore the zoom magnification (1.1 magnification) of third frame 1613 which has been image-processed by the ISP 550, scale (for example, crop) the third frame 1613, which has been processed by the ISP 550 at the 1.1 zoom magnification, to the size of the 1.4 zoom magnification, and output the same.

In the next order, when the ISP 550 outputs the fourth frame 1614, the processor 420 may perform control to transfer 1.3 zoom magnification information to the scaler 560 and process the ninth frame 1619 input into the ISP 550 at the 1.0 zoom magnification.

As indicated by reference numeral <1604>, the scaler 560 may ignore the zoom magnification (1.1 magnification) of fourth frame 1614 output from the ISP 550, scale (for example, crop) the fourth frame 1614 processed by the ISP 550 at the 1.1 zoom magnification in the size of the 1.3 zoom magnification, and output the fourth frame 1614.

In the next order, when the ISP 550 outputs the fifth frame 1615, the processor 420 may perform control to transfer 1.2 zoom magnification information to the scaler 560 and process the tenth frame 1620 transferred to the ISP 550 at the 1.0 zoom magnification.

As indicated by reference numeral <1605>, the scaler 560 may ignore the zoom magnification (1.1 magnification) of fifth frame 1615 output from the ISP 550, scale (for example, crop) the fifth frame 1615, which has been processed by the ISP 550 at the 1.1 zoom magnification, to the size of the 1.2 zoom magnification, and output the same.

In the next order, when the ISP 550 outputs the sixth frame 1616, the processor 420 may transfer 1.1 zoom magnification information to the scaler 560 and control the ISP 550 to process the eleventh frame 1621 at the 1.0 zoom magnification.

As indicated by reference numeral <1606>, the scaler 560 may ignore the zoom magnification (1.1 magnification) of sixth frame 1616 output from the ISP 550, scale (for example, crop) the sixth frame 1616, which has been processed by the ISP 550 at the 1.1 zoom magnification, to the size of the 1.0 zoom magnification, and output the same.

Thereafter, when the ISP 550 outputs the seventh frame 1617, the scaler 560 may transfer 1.0 zoom magnification information to the scaler 560 and control the ISP 550 to process the twelfth frame 1622 at the 1.0 zoom magnification. In this case, at the time point at which the seventh frame 1716 is output, the processor 420 may identify that the output magnification of the ISP 550 is the same as the zoom magnification for which the request is made to the scaler 560 and end the operation of the scaler 560.

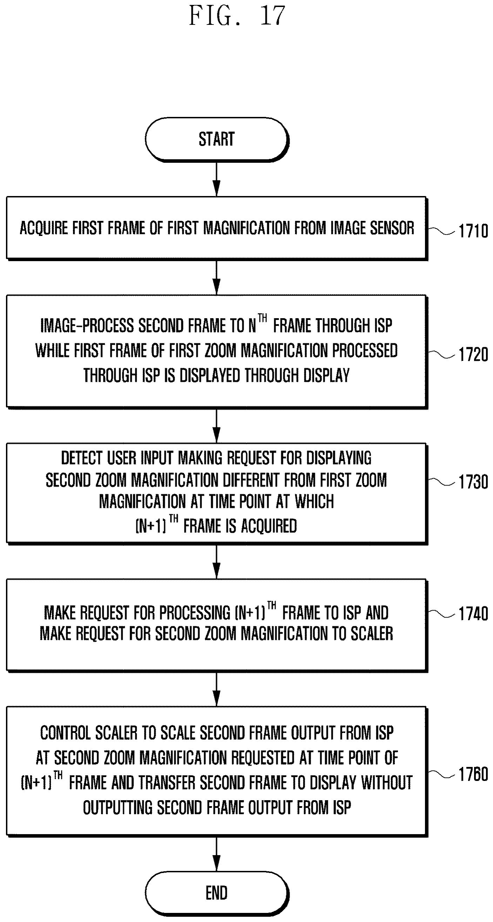

FIG. 17 illustrates a method of improving the camera zoom in and out performance of the electronic device according to an embodiment.

Referring to FIG. 17, a processor (for example, the processor 120 of FIG. 1 or the processor 420 of FIG. 4) of an electronic device (for example, the electronic device 101 of FIG. 1 or the electronic device 101 of FIGS. 4 and 5) according to an embodiment may acquire a first frame of a first zoom magnification from an image sensor (for example, the image sensor 230 of FIG. 2, the image sensor 410 of FIG. 4, or the image sensor 540 of FIG. 5) in operation 1710.

In operation 1720, the processor 420 may perform control to process a second frame to an N^{th} frame through the ISP 550 while the first frame of the first zoom magnification processed through the ISP (for example, the image signal processor 260 of FIG. 2 or the ISP 550 of FIG. 5) is output to the display.

In operation 1730, the processor 420 may detect or receive a user input making a request for displaying a second zoom magnification different from the first zoom magnification at the time point at which the (N+1)^{th} frame is acquired. The user input may be touch gesture such as pinch in or pinch out but is not limited thereto.

In operation 1740, the processor 420 may transfer a request for processing the (N+1)^{th} frame to the ISP 550 and make a request for the processing at the second zoom magnification to a scaler (for example, the scaler 560 of FIG. 5) in parallel or independently.

In operation 1760, the processor 420 may control the scaler to scale the second frame output from the ISP 550 at the second zoom magnification requested at the time point of the (N+1)^{th} frame and transfer the same to the display without outputting the second frame output from the ISP 550 by the scaler 560.

A method of improving a camera zoom performance by an electronic device 101 may include an operation of, when a camera function is executed, acquiring a first frame of a first zoom magnification from an image sensor 410 or 540, an operation of performing control to image-process a second frame to an N^{th} frame at a first zoom magnification through the image signal processor 550 while the first frame of the first zoom magnification processed through the image signal processor 550 is output to a display 440, an operation of making a request for processing the an (N+1)^{th} frame to the image signal processor 550, based on a user input making a request for displaying a second zoom magnification different from the first zoom magnification at a time point at which the (N+1)^{th} frame is acquired, an operation of transferring a second zoom magnification request at the time point at which the (N+1)^{th} frame is acquired to a scaler 560 disposed between an output terminal of the image signal processor 550 and an input terminal of the display 440, and an operation of scaling a second frame processed at the first zoom magnification by the image signal processor 550 to the second zoom magnification requested at the time point at which the (N+1)^{th} frame is acquired and outputting the second frame to the display 440 by the scaler 560 in a second frame output order.

According to an embodiment, the scaler 560 may be configured to ignore a zoom magnification of a frame output from the image signal processor 550 and prioritize the second zoom magnification request transferred from the processor 420.

According to an embodiment, the operation of transferring the second zoom magnification request at the time point at which the (N+1)^{th} frame is acquired to the scaler 560 may include dividing an app zoom request until the first zoom magnification reaches the second zoom magnification into two or more zoom magnification change steps and transferring the changed app zoom request to the scaler 560 or the image signal processor 550.

According to an embodiment, when the user input includes a first touch gesture making a request for zoom in, the second zoom magnification may be configured as a zoom magnification having a size enlarged than the first zoom magnification.

According to an embodiment, when the user input includes a second touch gesture making a request for zoom out, the second zoom magnification may be configured as a zoom magnification having a size reduced than the first zoom magnification.

According to an embodiment, the user input may include a button input or progress bar input making a request for zoom in, and the method may further include an operation of, after the operation of receiving the user input, calculating a predicted zoom magnification step expected until the first zoom magnification reaches the second zoom magnification, separately from the zoom magnification change steps, and configuring a zoom magnification according to the predicted zoom magnification step to be applied to the scaler 560.

According to an embodiment, the method may further include an operation of, after the operation of outputting to the display 440, ending an operation of the scaler 560 when a zoom magnification of a frame image-processed through the image signal processor 550 is equal to a zoom magnification corresponding to the user input transferred to the scaler 560.

According to an embodiment, the method may further include an operation of, when the second zoom magnification is configured as a zoom magnification having a size reduced than the first zoom magnification, controlling the image signal processor 550 to process an image at a third zoom magnification obtained by applying a margin rate to the first zoom magnification output to the display 440.

According to an embodiment, the operation of receiving the user input may further include an operation of calculating a zoom speed through a difference between the first zoom magnification and the second zoom magnification, controlling the image signal processor to process the image at a fourth zoom magnification obtained by further increasing the margin rate when the zoom speed comes close to the third zoom magnification, and adding a zoom magnification change step between the first zoom magnification and the second zoom magnification.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each element (e.g., a module or a program) of the above-described elements may include a single entity or multiple entities, and some of the multiple entities mat be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a display;
an image sensor;
an image signal processor configured to process frames transferred from the image sensor;
a scaler disposed between an output terminal of the image signal processor and an input terminal of the display; and
a processor operatively connected to the image signal processor and the scaler; and
a memory configured to store instructions executable by the processor,
wherein the instructions, when a camera function is executed, cause the electronic device to:
acquire a first frame of a first zoom magnification from the image sensor by the image signal processor;
perform control to image-process a second frame to an N^{th} frame at the first zoom magnification through the image signal processor while the first frame of the first zoom magnification processed through the image signal processor is output on the display;
receive a user input requesting displaying at a second zoom magnification different from the first zoom magnification at a time point at which an (N+1)^{th} frame is acquired;
request the image singal processor to process the (N+1)^{th} frame and transfer, to the scaler, the second zoom magnification request at the time point at which the (N+1)^{th} frame is acquired; and
in an output order of the second frame, scale the second frame processed at the first zoom magnification by the image signal processor to the second zoom magnification requested at the time point at which the (N+1)^{th} frame is acquired and transfer the second frame to the display by the scaler.

2. The electronic device of claim 1, wherein the instructions are further configured to cause the electronic device to process, by the scaler, the second zoom magnification request transferred from processor in preference to zoom magnification information of a frame output by the image signal processor.

3. The electronic device of claim 1 or 2, wherein the instructions are further configured to cause the electronic device to change, by the processor, a zoom request until the first zoom magnification reaches the second zoom magnification into at least two zoom magnification change steps, and transfer, by the processor, the change steps to the scaler or the image signal processor.

4. The electronic device of claim 3, wherein the instructions are further configured to cause the electronic device to request, by the processor, the scaler to perform processing at a zoom magnification corresponding to the user input at a time point at which the second frame is output, and simultaneously or in parallel therewith, request the image signal processor to perform processing at the zoom magnification corresponding to the user input at a time point at which an (N+1)^{th} frame is input.

5. The electronic device of claim 3, wherein, in case that the user input comprises a first touch gesture requesting zoom-in, the second zoom magnification is configured as a zoom magnification having a larger size than the first zoom magnification, and in case that the user input comprises a second touch gesture requesting zoom-out, the second zoom magnification is configured as a zoom magnification having a smaller size than the first zoom magnification.

6. The electronic device of claim 3, wherein the user input comprises a button input or progress bar input requesting zoom-in, and
wherein the instructions are further configured to cause the electronic device to configure, by the processor, the second zoom magnification as a target zoom maginification, calculate, by the processor, a predicted zoom magnification step expected until the first zoom magnification reaches the second zoom magnification, separately from the zoom magnification change steps, and apply, by the processor, a zoom magnification according to the predicted zoom magnification step to the scaler.

7. The electronic device of claim 6, wherein the instructions cause the electronic device to terminate, by the processor, the operation of the scaler in case that a zoom magnification of a frame image-processed through the image signal processor is equal to a zoom magnification corresponding to the user input, transferred to the scaler.

8. The electronic device of claim 6, wherein the instructions cause the electronic device to control, by the processor, the image signal processor to process an image at a third zoom magnification obtained by applying a margin rate to the first zoom magnification output on the display.

9. The electronic device of claim 8, wherein the instructions are configured to cause the electronic device to calculate, by the processor, a zoom speed through a difference between the first zoom magnification and the second zoom magnification, control, by the processor, the image signal processor to process the image at a fourth zoom magnification obtained by further inceasing the margin rate than the third zoom magnification in case that the zoom speed is close to the third zoom magnification, and further add, by the processor, a zoom magnification change step between the first zoom magnification and the second zoom magnification.

10. The electronic device of claim 1 or 2, wherein the scaler is configured to crop and output an image of a frame output by the image signal processor according to a zoom magnification request.

11. A method of improving a camera zoom performance by an electronic device, the method comprising:
in case that a camera function is executed, acquiring, by an image signal processor, a first frame of a first zoom magnification from an image sensor;
performing control to image-process a second frame to an N^{th} frame at a first zoom magnification through the image signal processor while the first frame of the first zoom magnification processed through the image signal processor is output on a display;
receiving a user input requesting displaying at a second zoom magnification different from the first zoom magnification at a time point at which an (N+1)^{th} frame is acquired;
requesting the imagge signal processor to process the (N+1)^{th} frame and transferring, to a scaler located behind an output terminal of the image signal processor, the second zoom magnification request at the time point at which the (N+1)^{th} frame is acquired; and
in an output order of the second frame, scaling a second frame processed at the first zoom magnification by the image signal processor to the second zoom magnification requested at the time point at which the (N+1)^{th} frame is acquired and outputting the second frame on the display by the scaler.

12. The method of claim 11, wherein the scaler is configured to process the second zoom magnification request transferred from a processor of the electronic device in preference to a zoom magnification of a frame output by the image signal processor.

13. The method of claim 11, wherein the transferring of the second zoom magnification request at the time point of acquisition of the (N+1)^{th} frame to the scaler comprises changing a zoom request corresponding to the user input until the first zoom magnification reaches the second zoom magnification into at least two zoom magnification change steps and transferring the change steps to the scaler or the image signal processor.

14. The method of claim 13, wherein the user input comprises a button input or progress bar input requesting zoom-in, and
wherein the method further comprises, after the receiving of the user input, calculating a predicted zoom magnification step expected until the first zoom magnification reaches the second zoom magnification, separately from the zoom magnification change steps, and configuring a zoom magnification according to the predicted zoom magnification step to be applied to the scaler.

15. The method of claim 11, further comprising, after the outputting on the display, terminating the operation of the scaler in case that a zoom magnification of a frame image-processed through the image signal processor is equal to a zoom magnification corresponding to the user input, transferred to the scaler.
